(19) Europäisches Patentamt
European Patent Office
Office européen des brevets

(11) **EP 4 345 939 A2**

(12) **EUROPEAN PATENT APPLICATION**

(43) Date of publication:
**03.04.2024 Bulletin 2024/14**

(51) International Patent Classification (IPC):
*H01M 4/131* (2010.01)      *H01M 4/1391* (2010.01)
*H01M 4/36* (2006.01)       *H01M 4/485* (2010.01)
*H01M 4/505* (2010.01)      *H01M 4/525* (2010.01)
*H01M 4/62* (2006.01)       *H01M 10/0525* (2010.01)

(21) Application number: **23200499.4**

(22) Date of filing: **28.09.2023**

(52) Cooperative Patent Classification (CPC):
**H01M 4/525; H01M 4/131; H01M 4/1391;**
**H01M 4/364; H01M 4/366; H01M 4/485;**
**H01M 4/505; H01M 4/625; H01M 10/0525;**
H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.09.2022 KR 20220124523**

(71) Applicant: Samsung SDI Co., Ltd.
Yongin-si, Gyeonggi-do 17084 (KR)

(72) Inventors:
• SON, Inhyuk
  17084 Yongin-si (KR)
• MAH, Sangkook
  17084 Yongin-si (KR)
• JO, Sungnim
  17084 Yongin-si (KR)
• SHIM, Kyueun
  17084 Yongin-si (KR)

(74) Representative: Marks & Clerk LLP
15 Fetter Lane
London EC4A 1BW (GB)

(54) **COMPOSITE POSITIVE ELECTRODE ACTIVE MATERIAL, POSITIVE ELECTRODE AND LITHIUM BATTERY INCLUDING THE SAME, AND PREPARING METHOD THEREOF**

(57)    A composite positive electrode active material, a positive electrode and a lithium battery each including the same, and a method of preparing the composite positive electrode active material. The composite positive electrode active material includes a first core including a first lithium transition metal oxide, a second core including a second lithium transition metal oxide, and a shell along a surface of at least one of the first core and the second core, the shell includes a first metal oxide, a first carbon-based material, and a second carbon-based material, the first metal oxide is in a first carbon-based material matrix, the first metal oxide is represented by Formula $M_aO_b$ ($0<a\leq3$, $0<b<4$, and b is not an integer if a 1, 2, or 3), M is at least one metal selected from Groups 2 to 13, 15, and 16 of the periodic table of elements.

FIG. 1

EP 4 345 939 A2

**Description**

**BACKGROUND**

**1. Field**

Embodiments of the present disclosure described herein are related to a composite positive electrode active material, a positive electrode and a lithium battery each including the same, and a method of preparing the composite positive electrode active material.

**2. Description of the Related Art**

To meet the requirements of miniaturization and high performance of one or more suitable devices, it is important for lithium batteries to have high energy density as well as reduced size and weight. In other words, high capacity is becoming a crucial factor in lithium batteries.

To produce lithium batteries that meet the previously-described usage requirements, research is being conducted on a positive electrode active material having high capacity.

Also, positive electrode active materials in the art may have poor lifespan characteristics and thermal stability due to side reactions.

Therefore, there is a demand for a method capable of preventing or reducing the deterioration of battery performance while including a positive electrode active material with or even without high capacity.

**SUMMARY**

An aspect according to one or more embodiments is directed toward a novel composite positive electrode active material capable of preventing or reducing performance deterioration of a lithium battery by suppressing a side reaction of the composite positive electrode active material and improving reversibility of an electrode reaction.

An aspect according to one or more embodiments is directed toward a positive electrode including the composite positive electrode active material.

An aspect according to one or more embodiments is directed toward a lithium battery utilizing the positive electrode.

An aspect according to one or more embodiments is directed toward a method of preparing a composite positive electrode active material.

Additional aspects will be set forth in part in the description which follows and, in part, will be apparent from the description, or may be learned by practice of the presented embodiments of the disclosure.

According to one or more embodiments, a composite positive electrode active material includes:

a first core ($1^{st}$ core) including a first lithium transition metal oxide,
a second core ($2^{nd}$ core) including a second lithium transition metal oxide,
a shell disposed along a surface of at least one of the first core or the second core,
the shell includes a first metal oxide, a first carbon-based material, and a second carbon-based material,
the first metal oxide is disposed in a first carbon-based material matrix,
the first metal oxide is represented by Formula of $M_aO_b$ ($0<a\leq3$, $0<b<4$, and b is not an integer when a is 1, 2, or 3), M is at least one metal selected from Groups 2 to 13, 15, and 16 of the periodic table of elements,
the second carbon-based material includes a fibrous carbon-based material having an aspect ratio of 10 or more,
the first lithium transition metal oxide and the second lithium transition metal oxide have different particle diameters, and
the second lithium transition metal oxide includes a primary particle having a particle diameter of 1 $\mu$m or more.

According to another embodiment,
a positive electrode includes the composite positive electrode active material.

According to another embodiment,
a lithium battery includes the positive electrode.

According to another embodiment, a method of preparing a composite positive electrode active material includes:

applying (e.g., providing) a first lithium transition metal oxide; applying (e.g., providing) a second lithium transition metal oxide; applying (e.g., providing) a composite; applying (e.g., providing) a second carbon-based material;

preparing (e.g., providing) a first core/shell structure obtained by mechanically milling the first lithium transition metal oxide, the composite, and the second carbon-based material, and preparing (e.g., providing) a second core/shell structure obtained by mechanically milling the second lithium transition metal oxide, the composite, and the second carbon-based material; and

mixing the first core/shell structure and the second core/shell structure,

the composite includes at least one of a first metal oxide represented by Formula of $M_aO_b$ (0<a≤3, 0<b<4, and b is not an integer when a is 1, 2, or 3), and a first carbon-based material,

the first metal oxide is in a first carbon-based material matrix, M is at least one metal selected from Groups 2 to 13, 15, and 16 of the periodic table of elements,

the second carbon-based material includes a fibrous carbon-based material having an aspect ratio of 10 or more,

the first lithium transition metal oxide and the second lithium transition metal oxide have different particle diameters, and

the second lithium transition metal oxide includes a primary particle having a particle diameter of 1 μm or more.

At least some of the above and other features of the invention are set out in the claims.

## BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a cross-sectional schematic view of a core/shell structure according to an embodiment;
FIG. 2 is a scanning electron microscope image of a particle surface of a second core/shell structure utilized in Example 1;
FIG. 3 is a scanning electron microscope image of a particle surface of a first core/shell structure utilized in Example 1;
FIG. 4 is XPS images of bare NCA91 prepared in Comparative Example 1, a composite prepared in Preparation Example 1, and a first core/shell structure prepared in Example 1;
FIG. 5 is Raman spectrum images of a composite prepared in Preparation Example 1, and a first core/shell structure prepared in Example 1;
FIG. 6 is a schematic view of a lithium battery according to an embodiment;
FIG. 7 is a schematic view of a lithium battery according to an embodiment; and
FIG. 8 is a schematic view of a lithium battery according to an embodiment.

### Description of symbols for main parts of drawings

| | | | |
|---|---|---|---|
| 1 | Lithium battery | 2 | Negative electrode |
| 3 | Positive electrode | 4 | Separator |
| 5 | Battery Case | 6 | Cap assembly |
| 7 | Battery structure | 8 | Electrode tab |
| 10 | Core | 20 | Shell |
| 21 | First metal oxide | 22 | First carbon-based material |
| 23 | Second carbon-based material | 100 | Core/shell structure |

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," when preceding a list of elements, modify the entire list of elements and do not modify the individual elements of the list.

Various embodiments are illustrated in the accompanying drawings. The present disclosure may, however, be embodied in many other forms and should not be construed as being limited to the embodiments set forth herein. Rather, these embodiments are provided so that this disclosure will be thorough and complete, and will fully convey the scope of the present disclosure to those of ordinary skill in the art. Like reference numerals refer to like elements throughout, and duplicative descriptions thereof may not be provided.

It will be understood that when an element is referred to as being "on" another element, it can be directly on the other element or intervening elements may be present. In contrast, when an element is referred to as being "directly on" another element, there are no intervening elements.

It will be understood that, although the terms "first", "second", "third", etc. may be utilized herein to describe one or more suitable elements, components, regions, layers and/or sections, these elements, components, regions, layers and/or sections, should not be limited by these terms. These terms are only utilized to distinguish one element, component, region, layer and/or section, from another. Thus, a first element, component, region, layer or section, discussed could be termed a second element, component, region, layer and/or section, without departing from the teachings of the present disclosure.

The terminology utilized herein is for the purpose of describing particular example embodiments only and is not intended to be limiting of the present disclosure. As utilized herein, the singular forms are intended to include the plural forms including "at least one" as well, unless the context clearly indicates otherwise. A phrase "at least one" should not be construed as limited to be singular. As utilized herein, the term "and/or" includes any and all combinations of one or more of the associated listed items. It will be further understood that the terms "comprises" and/or "comprising," when utilized in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper", "top" and/or the like, may be utilized herein for ease of description to describe one element or feature's relationship to another element(s) or feature(s). It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" the other elements or features. Thus, the example term "below" can encompass both (e.g., simultaneously) an orientation of above and below. The device may be otherwise oriented (rotated 90 degrees or at other orientations) and the spatially relative terms utilized herein interpreted accordingly.

As utilized herein, "combination thereof" refers to a mixture, laminate, composite, copolymer, alloy, blend, reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout, and duplicative descriptions thereof may not be provided the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In some embodiments, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and/or the like.

As used herein, the term "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

As used herein, the terms "use," "using," and "used" may be considered synonymous with the terms "utilize," "utilizing," and "utilized," respectively.

The use of "may" when describing embodiments of the present disclosure refers to "one or more embodiments of the present disclosure."

As used herein, the singular forms "a", "an" and "the" are intended to include the plural forms as well, unless the context clearly indicates otherwise.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

A vehicle, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

Unless otherwise defined, all terms (including technical and scientific terms) utilized herein have the same meaning as commonly understood by one of ordinary skill in the art to which this present disclosure belongs. It will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

Example embodiments of present disclosure are described herein with reference to cross-sectional views that schematically illustrates embodiments. As such, variations from the shapes of the illustrations as a result, for example, of manufacturing techniques and/or tolerances, are to be expected. Thus, example embodiments of present disclosure should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the claims.

"Group" refers to a group of the periodic table of the elements according to the International Union of Pure and Applied Chemistry ("IUPAC") 1-18 Group classification system.

As utilized herein, the "particle diameter" indicates a particle diameter when the particle is spherical, and indicates a length of major axis of the particle when the particle is non-spherical. The particle diameter may be measured utilizing a particle size analyzer (PSA). "Particle diameter" is, for example, an average particle diameter. The "average particle diameter" is, for example, D50, which is a median particle diameter.

D50 is a particle size corresponding to a cumulative volume of 50% as calculated from a small-sized particle side in a particle size distribution measured through a laser diffraction method.

D90 is a particle size corresponding to a cumulative volume of 90% as calculated from a small-sized particle side in a particle size distribution measured through a laser diffraction method.

D10 is a particle size corresponding to a cumulative volume of 10% as calculated from a small-sized particle side in a particle size distribution measured through a laser diffraction method.

As utilized herein, a "metal" includes both (e.g., simultaneously) a metal and a metalloid such as silicon and germanium in an elemental state or an ionic state.

As utilized herein, an "alloy" refers to a mixture of at least two metals.

As utilized herein, an "electrode active material" refers to an electrode material which may undergo lithiation and delithiation.

As utilized herein, a "positive electrode active material" refers to a positive electrode material which may undergo lithiation and delithiation.

As utilized herein, a "negative electrode active material" refers to a negative electrode material which may undergo lithiation and delithiation.

As utilized herein, "lithiation" and "lithiate" refer to a process of adding lithium to an "electrode active material".

As utilized herein, "delithiation" and "delithiate" refer to a process of removing lithium from an electrode active material.

As utilized herein, "charging" and "charge" refer to a process of providing electrochemical energy to a battery.

As utilized herein, "discharging" and "discharge" refer to a process of removing electrochemical energy from a battery.

As utilized herein, a "positive electrode" and a "cathode" refer to an electrode where electrochemical reduction and lithiation occur during a discharging process.

As utilized herein, a "negative electrode" and an "anode" refer to an electrode where electrochemical oxidation and delithiation occur during a discharging process. As utilized herein, an "aspect ratio" of fibrous carbon-based material can be measured by a SEM and the "aspect ratio" of fibrous carbon-based material can be an average aspect ratio of at least one fibrous carbon-based materials reads on a SEM image.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

Hereinafter, a composite positive electrode active material according to embodiments, a positive electrode and a lithium battery including the same, and a method of manufacturing thereof will be described in more detail.

A composite positive electrode active material includes a first core (1st core) including a first lithium transition metal oxide, a second core (2nd core) including a second lithium transition metal oxide, and a shell disposed along a surface of at least one of the first core or the second core. The shell includes a first metal oxide, a first carbon-based material and a second carbon-based material. The first metal oxide is disposed in a first carbon-based material matrix, the first metal oxide is represented by Formula $M_aO_b$ ($0<a\leq3$, $0<b<4$, and b is not an integer, when a 1, 2, or 3), M is at least one metal selected from among Groups 2 to 13, 15 and 16 of the periodic table of elements, the second carbon-based material includes a fibrous carbon-based material having an aspect ratio of 10 or more, the first lithium transition metal oxide and the second lithium transition metal oxide have different particle diameters, and the second lithium transition metal oxide includes a primary particle having a particle diameter of 1 $\mu$m or more.

Hereinafter, the theoretical basis for the composite positive electrode active material according to one embodiment to provide remarkable effects will be described, but is intended to provide an understanding of the present disclosure and is not intended to limit the present disclosure in any way.

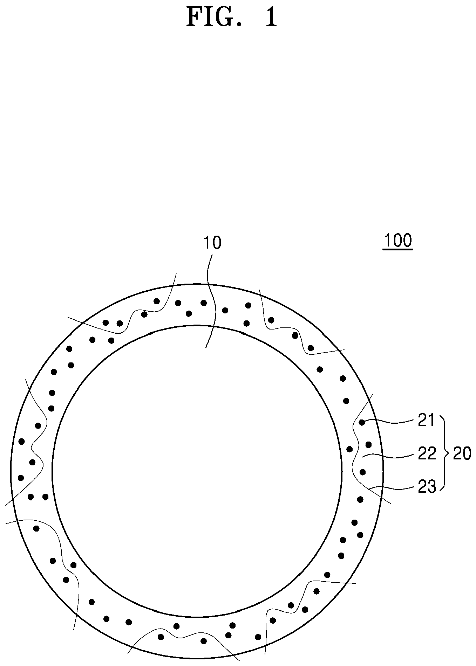

The composite positive electrode active material includes a first core/shell structure including a shell disposed on the first core, and a second core/shell structure including a shell disposed on the second core. The first core includes a first lithium transition metal oxide, and the second core includes a second lithium transition metal oxide. The first lithium transition metal oxide and the second lithium transition metal oxide have different particle diameters, and thus the first core/shell structure and the second core/shell structure have, for example, different particle diameters. The first core/shell structure and the second core/shell structure may each have, for example, a structure in FIG. 1. Alternatively, the composite positive electrode active material may include a first core/shell structure including a shell disposed on the first core, and a second core structure not including a shell disposed on the second core. Alternatively, the composite positive electrode active material may include a first core structure not including a shell disposed on the first core, and a second core/shell structure including a shell disposed on the second core.

Referring to FIG. 1, a core/shell structure 100 includes a core 10 and a shell 20 continuously or discontinuously disposed along a surface of the core 10. The shell 20 may cover all or part of the core 10. The shell 20 includes a first oxide 21, a first carbon-based material 22 and a second carbon-based material 23. The second carbon-based material 23 includes a fibrous carbon having an aspect ratio of 10 or more. In preparing the core/shell structure 100, the shell 20 may be continuously or discontinuously disposed on the lithium transition metal oxide core 10 utilizing a composite including a plurality of the first metal oxides 21 disposed in the matrix of the first carbon-based material 22. Therefore, the shell 20 may be evenly disposed on the core 10 while preventing or reducing aggregation of the first carbon-based material 22. The shell 20 disposed on the core 10 may effectively block or reduce the core 10 from contacting an electrolyte solution. Because the shell 20 effectively blocks the core 10 from contacting the electrolyte solution, a side reaction caused by the contact between the core 10 and the electrolyte solution may be prevented or reduced. In some embodiments, because the shell 20 is disposed on the core 10, cation mixing due to the contact between the core 10 and the electrolyte solution may be suppressed or reduced. Because the cation mixing due to the contact between the core 10 and the electrolyte solution is suppressed or reduced, formation of a resistance layer in and/or on a surface of the composite positive electrode active material 100 may be suppressed or reduced. In some embodiments, because the shell 20 is disposed on the core 10, elution of lithium transition metal ions from the lithium transition metal oxide core 10 may also be suppressed or reduced.

The first carbon-based material 22 may be, for example, a crystalline carbon-based material. The first carbon-based material 22 may be, for example, a carbon-based nanostructure. The first carbon-based material 22 may be, for example, a two-dimensional nanostructure. The first carbon-based material 22 may be, for example, graphene. In this case, the shell 20 including a graphene and/or a matrix thereof has flexibility, and thus easily receives changes in volume of the core 10 during charging and discharging, thereby suppressing occurrence of cracks inside the core 10. The graphene has high electronic conductivity, and thus interfacial resistance between the core 10 and the electrolyte solution may be reduced. Therefore, despite introducing the shell 20 including graphene, the internal resistance of a lithium battery including a composite positive electrode active material may be maintained or reduced. In contrast, because general materials of a carbon-based nanostructure are easily aggregated, it may be difficult to coat a lithium transition metal oxide with the general materials.

The second carbon-based material 23 is a fibrous carbon having an aspect ratio of 10 or more. The shell 20 includes the second carbon-based material, and thus the core/shell structure 100 and the composite positive electrode active material including the same may have a longer conducting path. Because a three-dimensional conductive network is formed between a plurality of core/shell structure 100 particles, the second carbon-based material 23 may reduce the internal resistance of the positive electrode including the composite positive electrode active material. Because the fibrous carbon is fixed on the core/shell structure 100, the substantially uniform and stable three-dimensional conductive network may be formed between a plurality of core/shell structure 100 particles. Therefore, because the core/shell structure 100 includes the second carbon-based material 23, a lithium battery including a composite positive electrode active material may have improved high-rate characteristics. In contrast, it is difficult for a simple mixture of the lithium transition metal oxide core and the fibrous carbon, which is the second carbon-based material, to form a substantially uniform three-dimensional conductive network between a plurality of lithium transition metal oxide core particles due to an aggregation of the fibrous carbon, etc.

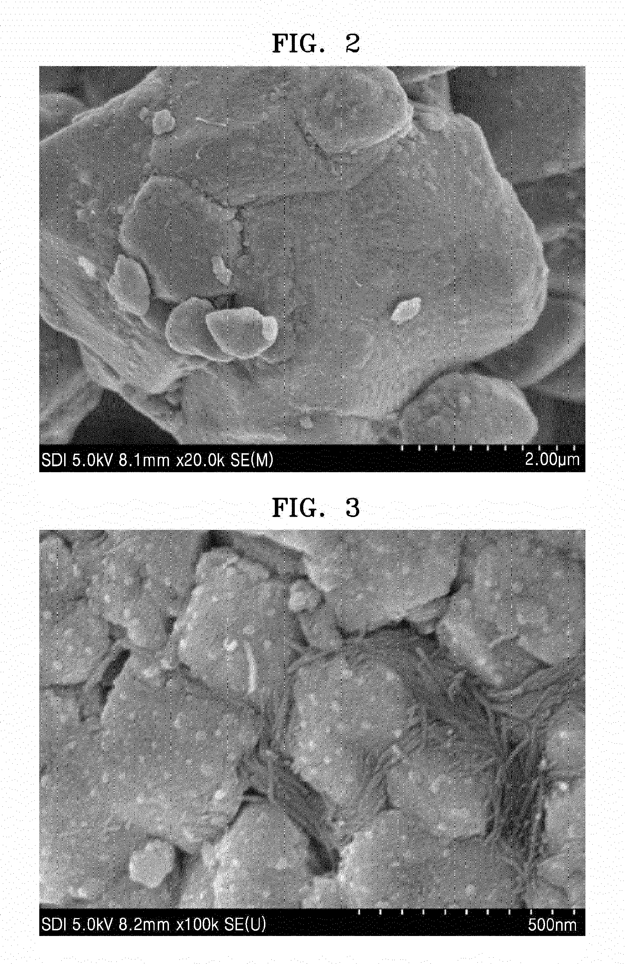

Referring to FIGS. 2 and 3, the second carbon-based material has an aspect ratio of 10 or more, or 20 or more. The carbon-based material may have the aspect ratio of, for example, about 10 to about 100,000, about 10 to about 80,000, about 10 to about 50,000, about 10 to about 10,000, about 10 to about 5000, about 10 to about 1000, about 10 to about 500, about 10 to about 100, or about 10 to about 50. The aspect ratio of the second carbon-based material is, for example, a ratio of the length of a major axis passing through the center of the second carbon-based material, that is, the length of the second carbon-based material, to the length of a minor axis passing through the center of the second carbon-based material, perpendicular to the major axis, that is, the diameter of the second carbon-based material. The second carbon-based material may have a diameter of, for example, 50 nm or less, 30 nm or less, 20 nm or less, or 10 nm or less. The second carbon-based material may have a diameter of, for example, about 1 nm to about 50 nm, about 1 nm to about 30 nm, or about 1 nm to about 10 nm. In the case of the second carbon-based material has an excessively large diameter, the absolute number of strands per volume decreases, and thus internal resistance reduction effects may be insignificant. In the case of the second carbon-based material having an excessively small diameter, substantially uniform dispersion may be difficult. The second carbon-based material may have a length of, for example, 1000 $\mu$m or less, 100 $\mu$m or less, 50 $\mu$m or less, 10 $\mu$m or less, 5 $\mu$m or less, 2 $\mu$m or less, 1 $\mu$m or less, 500 nm or less, or 300 nm or less. The second carbon-based material may have a length of, for example, about 100 nm to about 1000 $\mu$m, about 100 nm to about 500 $\mu$m, about 100 nm to about 100 $\mu$m, about 100 nm to about 50 $\mu$m, about 100 nm to about 10 $\mu$m, about 100 nm to about 5 $\mu$m, about 100 nm to about 2 $\mu$m, about 100 nm to about 1 $\mu$m, about 100 nm to about 500 nm, about, or about 100 nm to about 300 nm. The second carbon-based material may have a length of, for example, 500 nm to about 1000 $\mu$m, about 500 nm to about 500 $\mu$m, about 500 nm to about 100 $\mu$m, about 500 nm to about 50 $\mu$m, about 500 nm to about 10 $\mu$m, about 500 nm to about 5 $\mu$m, or about 500 nm to about 2 $\mu$m. As the length of the second carbon-based material increases, the internal resistance of the electrode may decrease. In the case of the second carbon-based material having an excessively short length, it may be difficult to provide an effective conducting path.

Referring to FIG. 2, the first lithium transition metal oxide includes a secondary particle including a plurality of primary particles. The primary particle included in the first lithium transition metal oxide may have a particle diameter of less than 1 $\mu$m, 800 nm or less, 600 nm or less, 500 nm or less, or 300 nm or less. An agglomerate of the plurality of primary particles may form a secondary particle. The secondary particle is, for example, a polycrystalline particle in which a plurality of crystalline primary particles is aggregated.

Referring to FIG. 3, the second lithium transition metal oxide includes a primary particle having a particle diameter of 1 $\mu$m or more. The primary particle having a particle diameter of 1 $\mu$m or more, for example, has one body particle shape. Because the second lithium transition metal oxide is a one-body particle having a particle diameter of 1 $\mu$m or more, a specific surface area decreases, and cracks are less likely to occur during charging and discharging, thereby reducing a side reaction with an electrolyte. A lithium battery including a composite positive electrode active material including such a second lithium transition metal oxide may have further improved cycle characteristics. In the case of the second lithium transition metal oxide being an agglomerate of a plurality of primary particles having a particle diameter of less than 1 $\mu$m, that is, a secondary particle, a specific surface area of the agglomerate increases, and thus a side reaction with an electrolyte solution in a charging and discharging process may increase due to increases in occurrence of cracks during charging and discharging. The primary particles which have a particle diameter of 1 $\mu$m or more, and are included in the second lithium transition metal oxide, are, for example, single crystal particles.

The composite positive electrode active material includes a first core/shell structure including a first lithium transition metal oxide and a second core/shell structure including a second lithium transition metal oxide. Because the first core/shell structure and the second core/shell structure have different particle diameters, the second core/shell structure is disposed in an air gap between the first core/shell structures, or the first core/shell structure is disposed in an air gap between the second core/shell structures. Therefore, because a core/shell structure particle having a different particle size is additionally disposed in an air gap between core/shell structure particles, a movement path for ions is shortened in the positive electrode, and a positive electrode including the composite positive electrode active material may have improved ionic conductivity. In some embodiments, because the shell disposed on the core includes a carbon-based material, a core/shell structure particle having a different particle size is additionally disposed in an air gap between core/shell structure particles, the movement path for ions may be shortened in the positive electrode, and a positive electrode including the composite positive electrode active material may have improved ionic conductivity. As a result, a lithium battery including the composite positive electrode active material may have high temperature cycle characteristics, and internal resistance increase may be suppressed or reduced. In some embodiments, because another core/shell structure particle is additionally disposed in an air gap between core/shell structure particles, the mixture density of a positive electrode may be increased, and, as a result, a lithium battery including the composite positive electrode active material may have more improved energy density. In contrast, in a conventional positive electrode including a positive electrode active material, a carbon-based conductive material is disposed in an air gap between positive electrode active material particles, and thus the electronic conductivity of the positive electrode may be improved. However, the carbon-based conductive material does not have ionic conductivity, and thus the ionic conductivity of the positive electrode may be degraded. In some embodiments, as the total thickness of the positive electrode active material layer increases, the ionic conductivity of the positive electrode may be significantly degraded. Therefore, performance deterioration of a lithium battery including such a positive electrode may be significant.

In the composite positive electrode active material, a first lithium transition metal oxide may be a large-diameter lithium transition metal oxide having a larger particle diameter than a second lithium transition metal oxide. The second lithium transition metal oxide is, for example, a small-diameter lithium transition metal oxide having a smaller particle diameter than the first lithium transition metal oxide. For example, the first core may be a large-diameter lithium transition metal oxide, and the second core may be a small-diameter lithium transition metal oxide. For example, the second core having a smaller particle diameter than the first core may be disposed in an air gap between the first cores. Because the second core particle, which is a small-diameter particle, is disposed (e.g., fitted) in the air gap between the first core particles, which are large-diameter particles, the positive electrode including the composite positive electrode active material may have improved ionic conductivity and/or electronic conductivity. In some embodiments, a positive electrode including the composite positive electrode active material may have improved energy density. As a result, a lithium battery including the composite positive electrode active material may have improved energy density and have improved cycle characteristics.

The first lithium transition metal oxide and the second lithium transition metal oxide may have, for example, a bimodal particle diameter distribution in a particle size distribution diagram. For example, the composite positive electrode active material may have a bimodal particle diameter distribution having two peaks in a particle size distribution diagram obtained utilizing a particle size analyzer (PSA), etc. The bimodal particle diameter distribution may have a first peak corresponding to the first lithium transition metal oxide, and a second peak corresponding to the second lithium transition metal oxide.

A particle diameter ratio of the first lithium transition metal oxide to the second lithium transition metal oxide may be, for example, about 3:1 to about 40:1, about 3:1 to about 30:1, about 3:1 to about 20:1, about 3:1 to about 10:1, or about 3:1 to about 5:1. In the case of a particle diameter ratio of the first lithium transition metal oxide to the second lithium transition metal oxide falling within the range above, a lithium battery including the composite positive electrode active material may have further improved energy density and cycle characteristics.

The first lithium transition metal oxide may have a particle diameter of, for example, greater than about 8 $\mu$m to about 30 $\mu$m, about 9 $\mu$m to about 25 $\mu$m, about 9 $\mu$m to about 20 $\mu$m, about 9 $\mu$m to about 15 $\mu$m, or about 9 $\mu$m to about 12 $\mu$m. The particle diameter of the first lithium transition metal oxide may be, for example, a median particle diameter (D50). The second lithium transition metal oxide may have a particle diameter of, for example, about 1 $\mu$m to less than about 8 $\mu$m, about 1 $\mu$m to about 7 $\mu$m, about 1 $\mu$m to about 6 $\mu$m, about 1 $\mu$m to about 5 $\mu$m, or about 1 $\mu$m to about 4 $\mu$m. The particle diameter of the second lithium transition metal oxide may be, for example, a median particle diameter (D50). In the case of the first lithium transition metal oxide and the second lithium transition metal oxide having the previously-described average particle diameter ranges, the lithium battery including the composite positive electrode active material may have improved energy density and/or cycle characteristics. The particle diameters of the first lithium transition metal oxide and the second lithium transition metal oxide are measured, for example, utilizing a laser diffraction type or kind or a dynamic light scattering type or kind measurement instrument. The particle diameter is measured utilizing, for example, a laser scattering particle size distribution analyzer (for example, LA-920 by HORIBA, Ltd), and is a value of the median particle diameter (D50) in the case of a cumulative percentage reaches 50% in terms of volume from small-sized particle side.

A weight ratio of the first lithium transition metal oxide to the second lithium transition metal oxide may be, for example, about 90:10 to about 60:40, about 85:15 to about 65:35, about 80:20 to about 65:35, or about 75:25 to about 65:35. In the case of the weight ratio of the first lithium transition metal oxide to the second lithium transition metal oxide falling within the range above, the lithium battery including a composite positive electrode active material may have improved energy density and/or cycle characteristics.

The second carbon-based material may include, for example, a carbon nanofiber, a carbon nanotube, or a combination thereof.

The carbon nanotube may include, for example, a carbon nanotube primary structure, a carbon nanotube secondary structure formed by aggregation of a plurality of carbon nanotube primary particles, or a combination thereof.

The carbon nanotube primary structure is one carbon nanotube unit. The carbon nanotube unit has a graphite sheet having a cylindrical shape having a nanoscale diameter, and has a sp2 bond structure. The graphite sheet may exhibit characteristics of conductors or characteristics of semiconductors depending on the bending angle and structure thereof. The carbon nanotube unit may be classified into a single-walled carbon nanotube (SWCNT), a double-walled carbon nanotube (DWCNT), a multi-walled carbon nanotube (MWCNT) according to the number of bonds that form the wall. As a wall thickness of the carbon nanotube unit is smaller, resistance becomes lower.

The carbon nanotube primary structure may include, for example, a single-walled carbon nanotube (SWCNT), a double-walled carbon nanotube (DWCNT), a multi-walled carbon nanotube (MWCNT), or a combination thereof. The carbon nanotube primary structure may have a diameter of, for example, 1 nm or more, or 2 nm or more. The carbon nanotube primary structure may have a diameter of, for example, 20 nm or less, or 10 nm or less. The carbon nanotube primary structure may have a diameter of, for example, about 1 nm to about 20 nm, about 1 nm to about 15 nm, or about 1 nm to about 10 nm. The carbon nanotube primary structure may have a length of, for example, 100 nm or more, or 200 nm or more. The carbon nanotube primary structure may have a length of, for example, 2 $\mu$m or less, 1 $\mu$m or less, 500 nm or less, or 300 nm or less. The carbon nanotube primary structure may have a length of, for example, about 100 nm to about 2 $\mu$m, about 100 nm to about 1 $\mu$m, about 100 nm to about 500 nm, about 100 nm to about 400 nm, about 100 nm to about 300 nm, or about 200 nm to about 300 nm. The diameter and length of the carbon nanotube primary structure may be measured from scanning electron microscope (SEM) or transmission electron microscope (TEM) images. In some embodiments, the diameter and/or length of the carbon nanotube primary structure may be measured by utilizing a laser diffraction method.

A carbon nanotube secondary structure is a structure formed by assembling carbon nanotube primary structures into entirely or partially a carbon nanotube bundle or a carbon nanotube bunch. The carbon nanotube secondary structure may include a bundle-type or kind carbon nanotube, a rope-type or kind nanotube, or a combination thereof. The carbon nanotube secondary structure may have a diameter of, for example, 2 nm or more, or 3 nm or more. The carbon nanotube secondary structure may have a diameter of, for example, 50 nm or less, 30 nm or less, 20 nm or less, or 10 nm or less. The carbon nanotube secondary structure may have a diameter of, for example, about 2 nm to about 50 nm, about 2 nm to about 30 nm, or about 2 nm to about 20 nm. The carbon nanotube secondary structure may have a length of, for example, 500 nm or more, 700 nm or more, 1 $\mu$m or more, or 10 $\mu$m or more. The carbon nanotube secondary structure may have a length of, for example, 1000 $\mu$m or less, 500 $\mu$m or less, or 100 $\mu$m or less. The carbon nanotube secondary structure may have a length of, for example, about 500 nm to about 1000 $\mu$m, about 500 nm to about 500 $\mu$m, about 500 nm to about 200 $\mu$m, about 500 nm to about 100 $\mu$m, or about 500 nm to about 50 $\mu$m. The diameter and length of the carbon nanotube secondary structure may be measured utilizing scanning electron microscope (SEM) image or optical microscopy. In some embodiments, the diameter and/or length of the carbon nanotube secondary structure may be measured by utilizing a laser diffraction method.

The carbon nanotube secondary structure may be utilized, for example, in preparing a composite positive electrode active material after being dispersed in a solvent, and/or the like and converted into carbon nanotube primary structures.

An amount of the second carbon-based material may be, for example, about 0.1 wt% to about 50 wt%, about 1 wt% to about 40 wt%, or about 5 wt% to about 30 wt%, with respect to the total weight of the first carbon-based material and the second carbon-based material. Because the composite positive electrode active material includes the first carbon-based material and the second carbon-based material within the previously-described ranges, a conducting path may be more effectively secured in the composite positive electrode active material, and thus the internal resistance of the composite positive electrode active material may be further reduced. As a result, a lithium battery including the composite positive electrode active material may have more improved cycle characteristics. An amount of the second carbon-based material may be, for example, about 0.001 wt% to about 5 wt%, about 0.01 wt% to about 3 wt%, about 0.01 wt% to about 1 wt%, about 0.01 wt% to about 0.5 wt% or about 0.01 wt% to about 0.1 wt%, with respect to the total weight of the composite positive electrode active material. Because the composite positive electrode active material includes the second carbon-based material within the range above, a conducting path may be more effectively secured in the composite positive electrode active material, and thus the internal resistance of the composite positive electrode active material may be further reduced. As a result, a lithium battery including the composite positive electrode active material may have more improved cycle characteristics.

A second carbon-based material 23 may be disposed on a surface of the composite positive electrode active material. Referring to FIGS. 2 and 3, the second carbon-based material 23 may be disposed on a surface of the core/shell structure 10. In some embodiments, as shown in FIG. 1, the second carbon-based material 23 may protrude from the surface of the core/shell structure 100. Therefore, the second carbon-based material 23 may effectively provide a conductive network between a plurality of core/shell structures 100. Because the second carbon-based material 23 is disposed in the first carbon-based material 22 matrix, the core 10 may be easily coated. The first carbon-based material 22 matrix may act as a binder for binding the core and the second carbon-based material 23. Therefore, in the case of there being no first carbon-based material 22 matrix, it may be difficult for the second carbon-based material 23 to adhere to the core 10, or it may be easily exfoliated from the core 10 in a process of preparing a slurry for a positive electrode. In the case of a binder being added for binding the lithium transition metal oxide core 10 and the second carbon-based material 23, the core 10 is covered with an insulating binder, and thus the internal resistance of the composite positive electrode active material 100 may increase. In the case of the second carbon-based material and the core covered with the binder being subjected to a high-temperature heat treatment to carbonize the binder, the core 10 and the carbon-based material 23 may be deteriorated in the heat treatment process.

The shell also includes a first metal oxide and a first carbon-based material. The first carbon-based material is derived from, for example, a graphene matrix, and thus has relatively lower density and higher porosity than a carbon-based material derived from a graphite-based material. The first carbon-based material may have a d002 interplanar distance of, for example, 3.38 Å or more, 3.40 Å or more, 3.45 Å or more, 3.50 Å or more, 3.60 Å or more, 3.80 Å or more, or 4.00 Å or more. The first carbon-based material included in the shell may have a d002 interplanar distance of, for example, about 3.38 Å to about 4.0 Å, about 3.38 Å to about 3.8 Å, about 3.38 Å to 3.6 Å, about 3.38 Å to about 3.5 Å, or about 3.38 Å to about 3.45 Å. In contrast, a d002 interplanar distance of a comparable carbon-based material derived from a graphite-based material may be, for example, 3.38 Å or less, or about 3.35 Å to about 3.38 Å. Because the first metal oxide has a suitable voltage withstand characteristic, a lithium transition metal oxide included in the core may be prevented or reduced from deteriorating during high-voltage charging and discharging. The shell may include, for example, one type or kind of the first metal oxide, or two or more types (kinds) of different first metal oxides. As a result, a lithium battery including the composite positive electrode active material has improved high temperature cycle characteristics. An amount of the shell may be, for example, 0.1 wt% to about 5 wt%, about 0.1 wt% to about 4 wt%, about 0.1 wt% to about 3 wt%, about 0.1 wt% to about 2.5 wt%, about 0.1 wt% to about 2 wt%, or about 0.1 wt% to about 1.5 wt%, with respect to the total weight of the composite positive electrode active material. An amount of the first metal oxide may be, for example, 0.06 wt% to about 3 wt%, about 0.06 wt% to about 2.4 wt%, about 0.06 wt% to about 1.8 wt%, about 0.06 wt% to about 1.5 wt%, about 0.06 wt% to about 1.2 wt%, or about 0.06 wt% to about 0.9 wt%, with respect to the total weight of the composite positive electrode active material. Because the composite positive electrode active material may include the shell and the first metal oxide within the previously-described amount ranges, the lithium battery may have further improved cycle characteristics.

The first metal oxide may include a first metal, and the first metal may be, for example, at least one selected from Al, Nb, Mg, Sc, Ti, Zr, V, W, Mn, Fe, Co, Pd, Cu, Ag, Zn, Sb, and Se. The first metal oxide is, for example, at least one selected from $Al_2O_z(0<z<3)$, $NbO_x(0<x<2.5)$, $MgO_x(0<x<1)$, $Sc_2O_z(0<z<3)$, $TiO_y(0<y<2)$, $ZrO_y(0<y<2)$, $V_2O_z(0<z<3)$, $WO_y(0<y<2)$, $MnO_y(0<y<2)$, $Fe_2O_z(0<z<3)$, $Co_3O_w(0<w<4)$, $PdO_x(0<x<1)$, $CuO_x(0<x<1)$, $AgO_x(0<x<1)$, $ZnO_x(0<x<1)$, $Sb_2O_z(0<z<3)$, or $SeO_y(0<y<2)$. Because the first metal oxide is disposed in the first carbon-based material matrix, the shell disposed on the core has improved uniformity, and the voltage withstand capability of the composite positive electrode active material is further improved. For example, the shell includes $Al_2O_X$ $(0<x<3)$ as the first metal oxide.

The shell may further include at least one second metal oxide represented by Formula $M_aO_c$ ($0<a\leq3$, $0<c\leq4$, and c is an integer when a is 1, 2 or 3). M is at least one metal selected from among Groups 2 to 13, 15, and 16 of the periodic table of elements. For example, the second metal oxide includes the same metal as the first metal oxide, and c/a, which is a ratio of c to a in the second metal oxide, has a larger value than b/a, which is a ratio of b to a in the first metal oxide. For example, c/a>b/a. The second metal oxide may be selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide is, for example, a reduction product of the second metal oxide. By partially or fully reducing the second metal oxide, the first metal oxide is obtained. Therefore, the first metal oxide has a lower amount of oxygen and also has a lower oxidation number than the second metal oxide. The shell may include, for example, $Al_2O_x$ $(0<x<3)$, which is a first metal oxide, and $Al_2O_3$, which is a second metal oxide.

The shell includes a first carbon-based material, and the core includes a lithium transition metal oxide. In some embodiments, the first carbon-based material, and a transition metal in the lithium transition metal oxide may be chemically bound, for example, through a chemical bond. A carbon atom (C) in the first carbon-based material and a transition metal (Me) in the lithium transition metal oxide are chemically bound, for example, through a C-O-Me bond (for example, a C-O-Ni bond, or a C-O-Co bond) via an oxygen atom. Because the first carbon-based material disposed in the shell and the lithium transition metal oxide disposed in the core are chemically bound through a chemical bond, the core and the shell are composited. Therefore, the composite positive electrode active material is distinguished from a simple physical mixture of the first carbon-based material and the lithium transition metal oxide. In some embodiments, the first metal oxide and the first carbon-based material may also be chemically bound through a chemical bond. Herein, the chemical bond is, for example, a covalent bond, or an ionic bond.

The shell includes at least one first metal oxide, and may further include a second metal oxide, and at least one selected from the first metal oxide, and the second metal oxide may have a particle diameter of, for example, about 1 nm to about 100 nm, about 1 nm to about 50 nm, about 1 nm to about 30 nm, about 5 nm to about 30 nm, or about 10 nm to about 30 nm. In the case of the first metal oxide and/or the second metal oxide having nanoscale particle diameter ranges, the first metal oxide and/or the second metal oxide may be uniformly distributed in the first carbon-based material matrix. In the case of the particle diameter of at least one of the first metal oxide or the second metal oxide excessively increasing, the internal resistance of the composite negative electrode active material may increase due to an increase in a thickness of the shell. In the case of the particle diameter of at least one of the first metal oxide or the second metal oxide excessively decreasing, substantially uniform dispersion may be difficult.

The shell includes the first metal oxide and the first carbon-based material and may further include the second metal oxide. The first carbon-based material may be disposed in a direction in which the first carbon-based material protrudes from a surface of the first metal oxide and/or a surface of the second metal oxide. Through direct growth from the surface of the first metal oxide and/or the surface of the second metal oxide, the first carbon-based material may be disposed in a direction in which the first carbon-based material protrudes from the surface of the first metal oxide and/or the surface of the second metal oxide. The first carbon-based material disposed in a direction in which the first carbon-based material protrudes from the surface of the first metal oxide and/or the surface of the second metal oxide is, for example, a carbon-based two-dimensional nanostructure, a carbon-based flake, or graphene.

The composite positive electrode active material may include, for example, a third metal doped on the core and/or a third metal oxide applied on the core. In some embodiments, the shell may be disposed on the third metal doped on the core and/or on the third metal oxide applied on the core. For example, after the third metal is doped on the surface of a lithium transition metal oxide core, or the third metal oxide is applied on the surface of the lithium transition metal oxide, the shell may be disposed on the third metal and/or the third metal oxide. For example, the composite positive electrode active material may include a core, an interlayer disposed on the core, and a shell disposed on the interlayer, and the interlayer may include a third metal or a third metal oxide. The third metal may be at least one metal selected from Al, Zr, W and Co, and the third metal oxide may be $Al_2O_3$, $Li_2O$-$ZrO_2$, $WO_2$, $CoO$, $Co_2O_3$, $Co_3O_4$, or a combination thereof.

A thickness of the shell is, for example, 10 nm to about 2 $\mu$m, about 30 nm to about 1 $\mu$m, about 50 nm to about 1 $\mu$m, about 100 nm to about 500 nm, about 100 nm to about 300 nm, or about 100 nm to about 200 nm. In the case of the shell having the previously-described thickness, a positive electrode including the composite positive electrode active material may have improved electronic conductivity. A thickness of the shell can be, for example, measured by Scanning Electron Microscopy (SEM), Transmission Electron Microscopy (TEM), and other methods. A thickness of the shell can be, for example, measured by a cross-section SEM image of the composite positive electrode active material,

The shell may have, for example, a single layer structure, or a multilayer structure. The multilayer structure may be, for example, a two-layer structure to a five-layer structure. The single layer structure may be, for example, a first layer structure including a first metal oxide, or a first layer structure including a first metal oxide and a second metal oxide. The multilayer structure may have, for example, a structure including a first layer containing a first metal oxide and a second layer containing a second metal oxide. The multilayer structure may have, for example, a structure including a first layer containing a third metal oxide and a second layer containing a first metal oxide. The multilayer structure may have, for example, a structure including a first layer containing a third metal oxide and a second layer containing a first metal oxide and a second metal oxide. The multilayer structure may have, for example, a structure including a first layer containing a first metal oxide, and a second layer containing a third metal oxide. The multilayer structure may have, for example, a structure including a first layer containing a first metal oxide and a second metal oxide, and a second layer containing a third metal oxide.

The shell may be a dried coating layer produced utilizing a dry method. The dry method may be, for example, a mechanical milling method, but is not necessarily limited thereto, and any dry method available in the art may be utilized.

An amount of the shell may be, for example, 5 wt% or less, 4 wt% or less, 3 wt% or less, 2 wt% or less, 1.5 wt% or less, or 1 wt% or less, with respect to the total weight of the composite positive electrode active material. An amount of the shell may be, for example, about 0.01 wt% to about 5 wt%, about 0.05 wt% to about 4 wt%, about 0.05 wt% to about 3 wt%, about 0.05 wt% to about 2 wt%, about 0.05 wt% to about 1.5 wt%, or about 0.05 wt% to about 1 wt%, with respect to the total weight of the composite positive electrode active material. An amount of the first metal oxide may be, for example%, about 0.006 wt% to about 3 wt%, about 0.03 wt% to about 2.4 wt%, about 0.03 wt% to about 1.8 wt%, about 0.03 wt% to about 1.2 wt%, about 0.03 wt% to about 0.9 wt%, or about 0.03 wt% to about 0.6 wt%, with respect to the total weight of the composite positive electrode active material. Because the composite positive electrode active material may include the shell and the first metal oxide in the ranges above, a lithium battery may have further improved cycle characteristics.

The shell disposed along the surface of the core may be formed by, for example, applying the composite including the first metal oxide, and the first carbon-based material, such as graphene, on the core through a milling method and/or the like. Therefore, the shell continuously or discontinuously disposed along a surface of the core may include, for example, at least one selected from a composite including a first metal oxide and a first carbon-based material, such as graphene, and/or a resultant material obtained by milling the composite. The first metal oxide may be disposed in a carbon-based material matrix, for example, a graphene matrix. The shell may be produced from, for example, a composite including a first metal oxide, and a first carbon-based material, such as graphene. The composite may further include a second metal oxide in addition to the first metal oxide. The composite may include, for example, two or more first metal oxides. The composite may include, for example, at least two first metal oxides, or at least two second metal oxides.

An amount of at least one of the composite or a resultant material obtained by milling the same may be, for example, 5 wt% or less, 3 wt% or less, 2 wt% or less, 2.5 wt% or less, or 1.5 wt% or less, with respect to the total weight of the composite positive electrode active material. An amount of at least one of the composite or a resultant material obtained by milling the same may be, for example, about 0.01 wt% to about 5 wt%, about 0.01 wt% to about 4 wt%, about 0.01 wt% to about 3 wt%, about 0.01 wt% to about 2.5 wt%, about 0.01 wt% to about 2 wt%, or about 0.01 wt% to about 1.5 wt%, with respect to the total weight of the composite positive electrode active material. Because the composite positive electrode active material may include at least one of the composite or a resultant material obtained by milling the same having the amount in the range above, a lithium battery including the composite positive electrode active material has further improved cycle characteristics.

The composite includes at least one first metal oxide and may further include the second metal oxide. A particle diameter of at least one selected from the first metal oxide and the second metal oxide may be about 1 nm to about 100 nm, about 1 nm to about 50 nm, about 1 nm to about 30 nm, about 5 nm to about 30 nm, or about 10 nm to about 30 nm. In the case of the first metal oxide and/or the second metal oxide having nanoscale particle diameter ranges, the first metal oxide and/or the second metal oxide may be uniformly distributed in the first carbon-based material matrix in the composite. Therefore, the composite may be uniformly applied on the core without aggregation, thereby forming a shell. In some embodiments, the first metal oxide and/or the second metal oxide may be uniformly disposed by having the previously-described particle diameter ranges. Therefore, because the first metal oxide and/or the second metal oxide are uniformly disposed on the core, the voltage withstand characteristics may be more effectively improved. The particle diameters of the first metal oxide and/or the second metal oxide are measured, for example, utilizing a measurement device through a laser diffraction method or a dynamic light scattering method. The particle diameter is measured utilizing, for example, a laser scattering particle size distribution analyzer (for example, LA-920 by HORIBA, Ltd), and is a value of the median particle diameter (D50) in the case of the cumulative percentage reaches 50% in terms of volume from small-sized particle side. At least one selected from the first metal oxide and the second metal oxide may have a deviation in uniformity of 3% or less, 2% or less, or 1% or less. The uniformity may be obtained by, for example, XPS. Therefore, at least one selected from the first metal oxide and the second metal oxide may be uniformly distributed in the composite while having a deviation in uniformity of 3% or less, 2% or less, or 1% or less.

The composite includes a first carbon-based material. The first carbon-based material may have, for example, a branched structure, and at least one metal oxide selected from the first metal oxide and the second metal oxide may be distributed in the branched structure of the first carbon-based material. The branched structure of the first carbon-based material may include, for example, a plurality of the first carbon-based material particles in contact with each other. Because the first carbon-based material may have a branched structure, one or more suitable conducting paths may be provided. The first carbon-based material may be, for example, graphene. Graphene may have, for example, a branched structure, and at least one metal oxide selected from the first metal oxide and the second metal oxide may be distributed in the branched structure of graphene. The branched structure of graphene includes, for example, a plurality of graphene particles in contact with each other. Because the graphene may have a branched structure, one or more suitable conducting paths may be provided.

The first metal oxide may have, for example, a spherical structure, and at least one metal oxide selected from the first metal oxide and the second metal oxide may be distributed in the spherical structure. A spherical structure of the first carbon-based material may have a size of about 50 nm to about 300 nm. A plurality of a first carbon-based material may have a spherical structure. Because the first carbon-based material may have the spherical structure, the composite may have a firm structure. The first carbon-based material may be, for example, graphene. Graphene may have, for example, a spherical structure, and at least one metal oxide selected from the first metal oxide and the second metal oxide may be distributed in the spherical structure of graphene. Size of the spherical structure of graphene may be about 50 nm to about 300 nm. A plurality of graphene may have a spherical structure. Because the graphene may have a spherical structure, the composite may have a firm structure.

The first carbon-based material may have, for example, a spiral structure where a plurality of spherical structures is connected, and at least one metal oxide selected from the first metal oxide and the second metal oxide may be distributed in the spherical structure in the spiral structure. The spiral structure of the first carbon-based material may have a size of about 500 nm to about 100 $\mu$m. Because the first carbon-based material may have the spiral structure, the composite may have a firm structure. The first carbon-based material may be, for example, graphene. Graphene may have, for example, a spiral structure in which a plurality of spherical structures is connected and at least one metal oxide selected from the first metal oxide and the second metal oxide may be distributed in the spherical structure in the spiral structure. The spiral structure of graphene may have a size of about 500 nm to about 100 $\mu$m. Because graphene may have the spiral structure, the composite may have a firm structure.

The first carbon-based material may have, for example, a cluster structure in which a plurality of spherical structures is aggregated, and at least one metal oxide selected from the first metal oxide and the second metal oxide may be distributed in the spherical structure of the cluster structure. The cluster structure of the first carbon-based material may have a size of about 0.5 mm to about 10 mm. Because the first carbon-based material may have the cluster structure, the composite may have a firm structure. The first carbon-based material may be, for example, graphene. The graphene may have, for example, a cluster structure in which a plurality of spherical structures is aggregated, and at least one metal oxide selected from the first metal oxide and the second metal oxide may be distributed in the spherical structure in the cluster structure. The cluster structure of graphene may have a size of about 0.5 mm to about 10 cm. Because graphene may have the cluster structure, the composite may have a firm structure. A size of the spherical structure, spiral structure and/or cluster structure can be measured by scanning electron microscopy (SEM) or a particle size analyzer (PSA).

The composite may be, for example, a crumpled faceted-ball structure, and at least one selected from the first metal oxide and the second metal oxide may be distributed in the structure, or on a surface of the structure. Because the composite may be the faceted-ball structure, the composite may be easily applied on uneven surface irregularities of the core.

The composite is, for example, a planar structure, and at least one selected from the first metal oxide and the second metal oxide may be distributed in the structure or on a surface of the structure. Because the composite may be the two-dimensional planar structure, the composite may be easily applied on uneven surface irregularities of the core.

The first carbon-based material may extend by a distance of 10 nm or less from the first metal oxide, and may include at least about 1 to about 20 carbon-based material layers. For example, by stacking a plurality of the first carbon-based material layers, the first carbon-based material having a total thickness of 12 nm or less is disposed on the first metal oxide. For example, the total thickness of the first carbon-based material may be about 0.6 nm to about 12 nm. The first carbon-based material may be, for example, graphene. Graphene may extend by a distance of 10 nm or less from the first metal oxide, and may include at least about 1 to about 20 of graphene layers. For example, by stacking a plurality of graphene layers, the graphene having a total thickness of 12 nm or less may be disposed on the first metal oxide. For example, the total thickness of the graphene may be about 0.6 nm to about 12 nm. The total thickness of the graphene layers on a first metal oxide can be, for example, measured by Scanning Electron Microscopy (SEM), Transmission Electron Microscopy (TEM).

A composite positive electrode active material includes a first core and a second core, and the first core and the second core may each independently include, for example, a lithium transition metal oxide represented by Formulas 1 to 8:

Formula 1 $\quad$ $Li_aNi_xCo_yM_zO_{2-b}A_b$

wherein, in Formula 1,
$1.0 \leq a \leq 1.2$, $0 \leq b \leq 0.2$, $0.8 \leq x < 1$, $0 < y < 0.2$, $0 < z < 0.2$, and $x+y+z=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A is F, S, Cl, Br, or a combination thereof.

Formula 2 $\quad$ $LiNi_xCo_yMn_zO_2$

Formula 3 $\quad$ $LiNi_xCo_yAl_zO_2$

wherein, in Formulas 2 and 3, $0.8 \leq x \leq 0.95$, $0 \leq y < 0.2$, $0 < z \leq 0.2$ and $x+y+z=1$.

Formula 4 $\quad$ $LiNi_xCo_yMn_zAl_wO_2$

wherein, in Formula 4, $0.8 \leq x \leq 0.95$, $0 \leq y < 0.2$, $0 < z < 0.2$, $0 < w < 0.2$, and $x+y+z+w=1$.

Despite the lithium transition metal oxides in Formulas 1 to 4 having a high nickel amount of 80 mol% or more, 85 mol% or more, or 90 mol% or more, or 95 mol% or more, with respect to the total moles of the transition metals (e.g. the metals excluding lithium), excellent or suitable initial capacity, room temperature lifespan characteristics, and high temperature lifespan characteristics may be provided. For example, in the lithium transition metal oxides in Formulas 1 to 4, the amount of nickel may be about 80 mol% to about 99 mol%, about 85 mol% to about 99 mol%, or about 90 mol% to about 97 mol%, with respect to the total moles of the transition metals.

Formula 5 $\quad\quad Li_aCo_xM_yO_{2-b}A_b$

wherein, in Formula 5,
$1.0 \leq a \leq 1.2$, $0 \leq b \leq 0.2$, $0.9 \leq x \leq 1$, $0 \leq y \leq 0.1$, and $x+y=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A is F, S, Cl, Br, or a combination thereof.

Formula 6 $\quad\quad Li_aNi_xMn_yM'_zO_{2-b}A_b$

wherein, in Formula 6,
$1.0 \leq a \leq 1.2$, $0 \leq 0 \leq 0.2$, $0 < x \leq 0.3$, $0.5 \leq y < 1$, $0 < z \leq 0.3$, and $x+y+z=1$,
M' is cobalt (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A is F, S, Cl, Br, or a combination thereof.

Formula 7 $\quad\quad Li_aM1_xM2_yPO_{4-b}X_b$

wherein, in Formula 7, $0.90 \leq a \leq 1.1$, $0 \leq x \leq 0.9$, $0 \leq y \leq 0.5$, $0.9 < x+y < 1.1$, $0 \leq b \leq 2$,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof.

Formula 8 $\quad\quad Li_aM3_zPO_4$

wherein, in Formula 8, $0.90 \leq a \leq 1.1$, $0.9 \leq z \leq 1.1$, and
M3 is chromium (Cr), manganese (Mn), iron (Fe), cobalt (Co), nickel (Ni), copper (Cu), zirconium (Zr), a combination thereof.

A positive electrode according to another embodiment, includes the previously-described composite positive electrode active material. Because the positive electrode includes the previously-described composite positive electrode active material, improved energy density, improved cycle characteristics, and increased conductivity are provided.

The composite positive electrode active material includes a second lithium transition metal oxide, which is a primary particle having a particle diameter of 1 μm or more, thereby preventing or reducing the second lithium transition metal oxide from rapid deterioration due to a side reaction during charging and discharging. Accordingly, lifespan characteristics of the lithium battery may be improved. In some embodiments, because a shell of the composite positive electrode active material includes the second carbon-based material, the composite positive electrode active material may further serve as a conductive material. Accordingly, an amount of the conductive material utilized in the positive electrode may be reduced. The conductive material is needed for improvement of the conductivity of the battery. However, increasing the amount of conductive material decreases the mixture density of the positive electrode, which, as a result, reduces the energy density of the lithium battery. In contrast, a positive active material according to the disclosure may reduce the amount of the conductive material by utilizing the previously-described composite positive electrode active material without increasing in the internal resistance. Accordingly, because the mixture density of the positive electrode increases, the lithium battery may have improved energy density as a result. In particular, by increasing the amount of the composite positive electrode active material while reducing the amount of the conductive material in a high-capacity lithium battery, the energy density of the lithium battery may significantly increase.

The positive electrode may be prepared by, for example, a wet method. The positive electrode is prepared by, for example, according to example embodiments. However, the method is not limited thereto, and is adjusted according to desired conditions.

First, the previously-described composite positive electrode active material, a conductive material, a binder, and a solvent are mixed to prepare a positive electrode active material composition. The prepared positive electrode active material composition is directly coated on an aluminium current collector and the resultant is dried to produce a positive electrode plate on which a positive electrode active material layer is formed. In some embodiments, the positive electrode active material composition is cast onto a separate support and then a film peeled off from the support is laminated on the aluminium current collector to produce a positive electrode plate on which a positive electrode active material layer is formed.

Examples of the conductive material include: carbon black, graphite particles, natural graphite, artificial graphite, acetylene black, Ketjen black, and a carbon fiber; a carbon nanotube; a metal powder or a metal fiber or a metal tube, such as copper, nickel, aluminium, silver; a conductive polymer such as a polyphenylene derivative, etc. However, the conductive material is not limited thereto, and any conductive material available in the art as a conductive material may be utilized. In some embodiments, the positive electrode may not include (e.g., may exclude), for example, a separate conductive material.

Examples of a binder includes a vinylidene fluoride/hexafluoropropylene copolymer, polyvinylidene fluoride, polyacrylonitrile, polymethyl methacrylate, polytetrafluoroethylene (PTFE), a mixture of the above-mentioned polymers, a styrene butadiene rubber-based polymer, etc., and examples of a solvent include N-methylpyrrolidone (NMP), acetone, water, etc. However, the solvent is not necessarily limited thereto, and any solvent available in the art may be utilized.

A plasticizer or a pore former may be further added to the positive electrode active material composition to form a pore inside the electrode plate.

Amounts of the composite positive electrode active material, the conductive material, the binder, and the solvent utilized in the positive electrode, are at the typical usage level in the lithium battery. According to the application and configuration of the lithium battery, at least one of the conductive material, the binder or the solvent may not be provided.

The amount of the binder utilized in the positive electrode may be about 0.1 wt% to 10 wt%, or 0.1 wt% to 5 wt%, with respect to the total weight of the positive electrode active material layer. The amount of the composite positive electrode active material utilized in the positive electrode may be about 80 wt% to about 99 wt%, about 90 wt% to about 99 wt%, or about 95 wt% to about 99 wt%, with respect to the total weight of the positive electrode active material layer. The amount of the conductive material utilized in the positive electrode may be about 0.01 wt% to about 10 wt%, about 0.01 wt% to about 5 wt%, about 0.01 wt% to about 3 wt%, about 0.01 wt% to about 1 wt%, about 0.01 wt% to about 0.5 wt%, or about 0.01 wt% to about 0.1 wt%, with respect to the total weight of the positive electrode active material layer. The conductive material may not be provided.

In addition to the previously-described composite positive electrode active material, another general positive electrode active material may be further included in the positive electrode.

The general positive electrode active material is a lithium-containing metal oxide, and any commonly available positive electrode active material in the art may be utilized without limitation. For example, at least one composite oxide of lithium and a metal selected from cobalt, manganese, nickel, and a combination thereof, may be utilized, and specific examples thereof include a compound represented by any one among Formulas: $Li_aA_{1-b}B'_bD_2$ (where, $0.90 \leq a \leq 1$, and $0 \leq b \leq 0.5$ are satisfied); $Li_aE_{1-b}B'_bO_{2-c}D_c$ (where, $0.90 \leq a \leq 1$, $0 \leq b \leq 0.5$, $0 \leq c \leq 0.05$ are satisfied); $LiE_{2-b}B'_bO_{4-c}D_c$ (where, $0 \leq b \leq 0.5$, $0 \leq c \leq 0.05$ are satisfied); $Li_aNi_{1-b-c}CO_bB'_cD_\alpha$ (where, $0.90 \leq a \leq 1$, $0 \leq b \leq 0.5$, $0 \leq c \leq 0.05$, $0 < \alpha \leq 2$ are satisfied); $Li_aNi_{1-b-c}Co_bB'_cO_{2-a}F'_\alpha$ (where, $0.90 \leq a \leq 1$, $0 \leq b \leq 0.5$, $0 \leq c \leq 0.05$, $0 < \alpha < 2$ are satisfied); $Li_aNi_{1-b-c}Co_bB'_cO_{2-a}F'_2$ (where, $0.90 \leq a \leq 1$, $0 \leq b \leq 0.5$, $0 \leq c \leq 0.05$, $0 < \alpha < 2$ are satisfied); $Li_aNi_{1-b-c}Mn_bB'_cD_a$ (where, $0.90 \leq a \leq 1$, $0 \leq b \leq 0.5$, $0 \leq c \leq 0.05$, $0 < \alpha \leq 2$ are satisfied); $Li_aNi_{1-b-c}Mn_bB'_cO_{2-a}F'_a$ (where, $0.90 \leq a \leq 1$, $0 \leq b \leq 0.5$, $0 \leq c \leq 0.05$, $0 < \alpha < 2$ are satisfied); $LiaNi_{1-b-c}Mn_bB'_cO_{2-a}F'_2$ (where, $0.90 \leq a \leq 1$, $0 \leq b \leq 0.5$, $0 \leq c \leq 0.05$, $0 < \alpha < 2$ are satisfied); $Li_aNi_bE_cG_dO_2$ (where, $0.90 \leq a \leq 1$, $0 \leq b \leq 0.9$, $0 \leq c \leq 0.5$, $0.001 \leq d \leq 0.1$ are satisfied.); $Li_aNi_bCo_cMn_dG_eO_2$ (where, $0.90 \leq a \leq 1$, $0 \leq b \leq 0.9$, $0 \leq c \leq 0.5$, $0 \leq d \leq 0.5$, $0.001 \leq e \leq 0.1$ are satisfied); $Li_aNiG_bO_2$ (where, $0.90 \leq a \leq 1$, $0.001 \leq b \leq 0.1$ are satisfied); $Li_aCoG_bO_2$ (where, $0.90 \leq a \leq 1$, $0.001 \leq b \leq 0.1$ are satisfied); $Li_aMnG_bO_2$ (where, $0.90 \leq a \leq 1$, $0.001 \leq b \leq 0.1$ are satisfied); $Li_aMn_2G_bO_4$ (where, $0.90 \leq a \leq 1$, $0.001 \leq b \leq 0.1$ are satisfied); $QO_2$; $QS_2$; $LiQS_2$;

$V_2O_5$; $LiV_2O_5$; $LiI'O_2$; $LiNiVO_4$; $Li_{(3-f)}J_2(PO_4)_3(0 \leq f \leq 2)$; $Li_{(3-f)}Fe_2(PO_4)_3(0 \leq f \leq 2)$; $LiFePO_4$.

In Formulas representing the previously-described compound: A is Ni, Co, Mn, or a combination thereof; B' is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. A compound added with a coating layer on the surface of the previously-described compound may be utilized, and a mixture of the previously-described compound and the compound added with a coating layer may be utilized. The coating layer added to the surface of the previously-described compound includes, for example, a coating element compound, which is an oxide of a coating element, an oxyhydroxide of a coating element, an oxycarbonate of a coating element, or a hydroxycarbonate of a coating element. The compound forming the coating layer may be amorphous or crystalline. The coating element included in the coating layer is Mg, Al, Co, K, Na, Ca, Si, Ti, V, Sn, Ge, Ga, B, As, Zr, or a mixture thereof. A forming method of the coating layer is selected unless the physical properties of the positive electrode active material are adversely affected. The coating method is, for example, a spray coating method, or a dipping method, etc. A specific coating method is well understood by those skilled in the art, and thus detailed description thereof will not be provided.

A lithium battery according to another embodiment includes a positive electrode including the previously-described composite positive electrode active material.

Because the lithium battery includes the positive electrode including the previously-described composite positive electrode active material, improved energy density, cycle characteristics, and thermal stability are provided.

The lithium battery is prepared by, for example, according to example embodiments described herein. However, the method is not limited thereto, and is adjusted according to desired conditions.

First, a positive electrode is prepared by the previously-described method of manufacturing a positive electrode.

Next, a negative electrode is prepared as follows. The negative electrode is prepared in substantially the same manner as the positive electrode except for utilizing, for example, a negative electrode active material in place of the composite positive electrode active material. In some embodiments, in a negative electrode active material composition, a conductive material, a binder, and a solvent may be substantially the same as those in the positive electrode.

For example, the negative electrode active material, the conductive material, the binder, and the solvent are mixed to prepare a negative electrode active material composition, and the negative electrode active material composition is directly coated on a copper current collector to produce a negative electrode plate. In some embodiments, a negative electrode active material composition is cast onto a separate support and a negative electrode film peeled off from the support is laminated on a copper current collector to produce a negative electrode plate.

Any negative electrode active material utilized in the art as a negative electrode active material for a lithium battery may be utilized. For example, at least one selected from the group consisting of a lithium metal, a metal that may be alloyable (e.g., able to form an alloy) with lithium, a transition metal oxide, a non-transition metal oxide, and a carbon-based material is included. The metal that may be alloyable with lithium is, for example, Si, Sn, Al, Ge, Pb, Bi, Sb-Si-Y alloy (where Y is an alkali metal, an alkaline earth metal, a Group 13 element, a Group 14 element, a transition metal, a rare earth element, or a combination element thereof, and Si is excluded.), Sn-Y alloy (where Y is an alkali metal, an alkaline earth metal, a Group 13 element, a Group 14 element, a transition metal, a rare earth element or a combination element thereof, and Sn is excluded.), etc. The element Y is, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof. The transition metal oxide is, for example, a lithium titanium oxide, vanadium oxide, lithium vanadium oxide, etc. The non-transition metal oxide is, for example, $SnO_2$, $SiO_x$ (0<x<2), etc. The carbon-based material is, for example, a crystalline carbon, an amorphous carbon, or a mixture thereof. The crystalline carbon may be, for example, graphite such as natural graphite, or artificial graphite, each of which has an amorphous shape, a plate shape, a flake shape, a spherical shape, or a fiber shape. The amorphous carbon is, for example, a soft carbon (carbon calcined at a low-temperature), a hard carbon, a mesophase pitch carbide, a calcined coke, etc.

Amounts of the negative electrode active material, the conductive material, the binder, and the solvent are at the typical usage levels in a lithium battery. According to the application and configuration of the lithium battery, at least one of the conductive material, the binder, or the solvent may not be provided.

The amount of the binder utilized in the negative electrode may be, for example, about 0.1 wt% to about 10 wt%, or about 0.1 wt% to about 5 wt%, with respect to the total weight of the negative electrode active material layer. The amount of the conductive material utilized in the negative electrode may be, for example, about 0.1 wt% to about 10 wt, or about 0.1 wt% to about 5 wt%, with respect to the total weight of the negative electrode active material layer. The amount of the negative electrode active material utilized in the negative electrode may be, for example, about 80 wt% to about 99 wt%, about 90 wt% to about 99 wt%, or about 95 wt% to about 99 wt%, with respect to the total weight of the negative electrode active material layer. In the case of the negative electrode active material being a lithium metal, the negative electrode may not include (e.g., may exclude) the binder and the conductive material.

Next, a separator to be inserted between the positive electrode and the negative electrode may be prepared.

Any separator commonly available in the art as a separator for a lithium battery may be utilized. As the separator, a separator having low resistance to a movement of ions in an electrolyte and excellent or suitable electrolyte-retaining ability may be utilized. Examples of the separator includes a glass fiber, polyester, Teflon, polyethylene, polypropylene, polytetrafluoroethylene (PTFE), or a combination thereof, each of which has a non-woven fabric type or kind or a woven fabric type or kind. A windable separator formed of polyethylene, polypropylene, and/or the like, may be utilized for a lithium-ion battery, and a separator having excellent or suitable organic electrolyte-retaining capability may be utilized for a lithium ion polymer battery.

The separator is produced according to example methods described herein. However, the method is not limited thereto, and is adjusted according to desirable conditions.

First, a polymer resin, a filler, and a solvent are mixed to prepare a separator composition. The separator composition may be directly coated onto an upper part of an electrode, and then dried to form a separator. In some embodiments, the separator composition is cast onto a support and dried, and a separator film separated from the support is laminated on an upper part of an electrode to form a separator.

The polymer utilized in the producing of the separator is not particularly limited, and any polymer commonly utilized for a binding material of the electrode plate may be utilized. Examples of the polymer include a vinylidenefluoride/hexafluoropropylene copolymer, polyvinylidene fluoride (PVDF), polyacrylonitrile, polymethyl methacrylate, a mixture thereof, etc.

Next, an electrolyte is prepared.

The electrolyte is, for example, an organic electrolyte solution. The organic electrolyte solution is prepared by, for example, dissolving a lithium salt in the organic solvent.

Any organic solvent available in the art as an organic solvent may be utilized. Examples of the organic solvent include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, $\gamma$-butyrolactone, dioxolane, 4-methyl dioxolane, N, N-dimethylformamide, dimethylacetamide, dimethyl sulfoxide, dioxane, 1,2-dimethoxy ethane, sulfolane, dichloroethane, chlorobenzene, nitrobenzene, diethylene glycol, dimethyl ether, a mixture thereof, etc.

Any lithium salt available in art as a lithium salt may be utilized. The lithium salt is, for example, $LiPF_6$, $LiBF_4$, $LiSbF_6$, $LiAsF_6$, $LiClO_4$, $LiCF_3SO_3$, $Li(CF_3SO_2)_2N$, $LiC_4FgSO_3$, $LiAlO_2$, $LiAlCl_4$, $LiN(C_xF_{2x+i}SO_2)(C_yF2_{y+i}SO_2)$ (where, x and y are each natural numbers of 1 to 20), LiCl, LiI, a mixture thereof, etc.

In some embodiments, the electrolyte is a solid electrolyte. The solid electrolyte is, for example, boron oxide, lithium oxynitride, etc. However, the solid electrolyte is not limited thereto, and any material available as a solid electrolyte in the art may be utilized. The solid electrolyte may be formed on the negative electrode through a method such as sputtering, or an additional solid electrolyte sheet is stacked on the negative electrode.

The solid electrolyte is, for example, an oxide-based solid electrolyte or a sulfide-based solid electrolyte.

The solid electrolyte is, for example, an oxide-based solid electrolyte. The oxide-based solid electrolyte is at least one selected from $Li_{i+x+y}Al_xTi_{2-x}Si_yP_{3-y}O_{12}$ (0<x<2, 0≤y<3), $BaTiO_3$, $Pb(Zr,Ti)O_3(PZT)$, $Pb_{1-x}La_xZr_{1-y}Ti_yO_3(PLZT)$ (0≤x<1, 0≤y<1), $RB(Mg_3Nb_{2/3})O_3$-$PbTiO_3(PMN$-$PT)$, $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (0<x<2, 0<y<3), $Li_xAl_yTi_z(PO_4)_3$ (0<x<2, 0<y<1, 0<z<3), $Li_{i+x+y}(Al, Ga)_x(Ti, Ge)_{2-x}Si_yP_{3-y}O_{12}$ (0≤x≤1 0≤y≤1), $Li_xLa_yTiO_3$ (0<x<2, 0<y<3), $Li_2O$, LiOH, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (M is Te, Nb, or Zr, and x is an integer of 1 to 10.). The solid electrolyte may be prepared by a sintering method, etc. For example, the oxide-based solid electrolyte is a Garnet-type or kind solid electrolyte selected from $Li_7La_3Zr_2O_{12}$ (LLZO) and $Li_{3+x}La_3Zr_{2-a}M_aO_{12}$ (M doped LLZO, M is Ga, W, Nb, Ta, or Al, and x is an integer of 1 to 10.).

The sulfide-based solid electrolyte may include, for example, lithium sulfide, silicon sulfide, phosphorus sulfide, boron sulfide, or a combination thereof. The sulfide-based solid electrolyte particle may include $Li_2S$, $P_2S_5$, $SiS_2$, $GeS_2$, $B_2S_3$, or a combination thereof. The sulfide-based solid electrolyte particle may be $Li_2S$ or $P_2S_5$. It is suitable that the sulfide-based solid electrolyte particle has higher lithium-ion conductivity than other inorganic compounds. For example, the sulfide-based solid electrolyte includes $Li_2S$ and $P_2S_5$. In the case of a sulfide-based solid electrolyte material forming the sulfide-based solid electrolyte includes $Li_2S$-$P_2S_5$, a mixing ratio of $Li_2S$ to $P_2S_5$ may be, for example, in a range of about 50:50 to about 90:10. In some embodiments, an inorganic solid electrolyte prepared by adding $Li_3PO_4$, a halogen, a halogen compound, $Li_{2+2x}Zn_{1-x}GeO_4$ ("LISICON", 0≤x<1), $Li_{3+y}PO_{4-x}N_x$ ("LIPON", 0<x<4, 0<y<3), $Li_{3.25}Ge_{0.25}P_{0.75}S_4$ ("Thio-LISICON"), $Li_2O$-$Al_2O_3$-$TiO_2$-$P_2O_5$("LATP"), etc., to $Li_2S$-$P_2S_5$, $SiS_2$, $GeS_2$, $B_2S_3$, or an inorganic solid electrolyte of a combination thereof, may be utilized as a sulfide-based solid electrolyte. Non-limiting examples of the sulfide-based solid electrolyte material include $Li_2S$-$P_2S_5$; $Li_2S$-$P_2S_5$-LiX (X is a halogen atom); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$-$P_2S_5$-$Z_mS_n$ (0<m<10, 0<n<10, Z is Ge, Zn or Ga); $Li_2S$-$GeS_2$; $Li_2S$-$SiS_2$-$Li_3PO_4$; and $Li_2S$-$SiS_2$-$Li_pMO_q$ (0<p<10, 0<q<10, M is P, Si, Ge, B, Al, Ga or In). In this regard, the sulfide-based solid electrolyte material may be prepared by processing a raw starting material (for example, $Li_2S$, $P_2S_5$, etc.) of the sulfide-based solid electrolyte material through a melt quenching method, a mechanical milling method, etc. In some embodiments, a calcination process may be performed after the treatment above. The sulfide-based solid electrolyte may be amorphous, crystalline, or in a mixed state thereof.

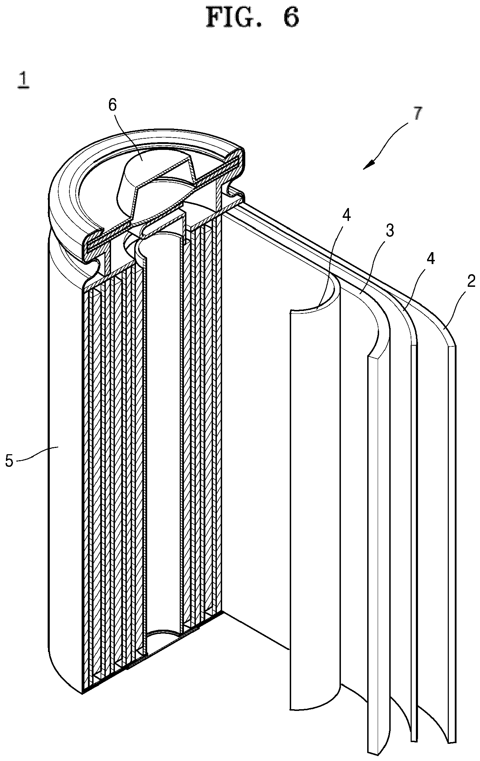

Referring to FIG. 6, a lithium battery 1 according to an embodiment includes a positive electrode 3, a negative electrode 2, and a separator 4. The positive electrode 3, the negative electrode 2, and the separator 4 are wound or folded to form a suitable battery structure 7. The formed battery structure 7 is received in a battery case 5. An organic electrolyte solution is injected into the battery case 5, and sealed with a cap assembly 6, thereby completing the preparation of the lithium battery 1. The battery case 5 is a cylindrical shape. However, the shape is not necessarily limited thereto, and is, for example, a rectangular shape, thin film shape, etc.

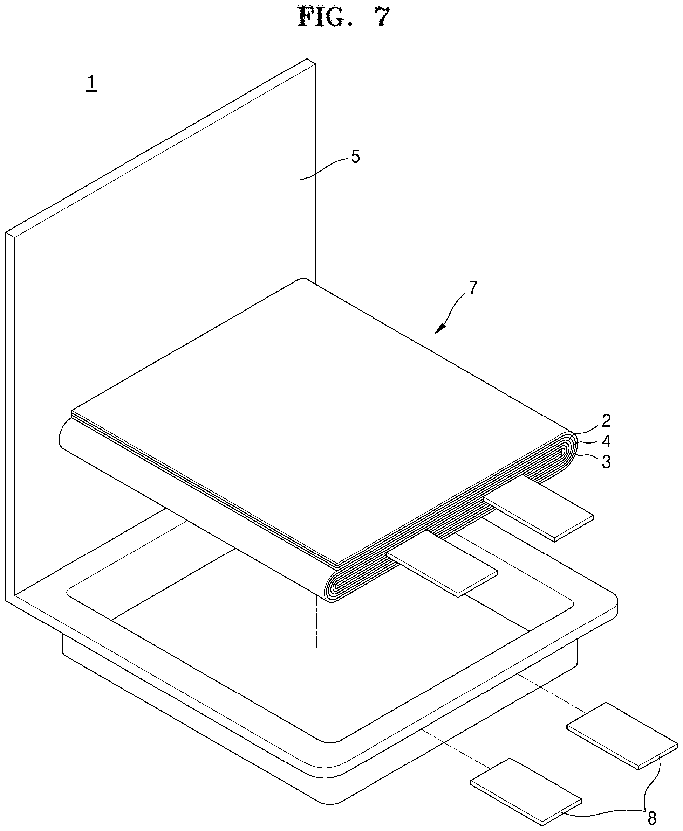

Referring to FIG. 7, a lithium battery 1 according to an embodiment includes a positive electrode 3, a negative electrode 2, and a separator 4. The separator 4 is disposed between the positive electrode 3 and the negative electrode 2. In some embodiments, the positive electrode 3, negative electrode 2, and the separator 4 are wound or folded to form a battery structure 7. The formed battery structure 7 is received in a battery case 5. An electrode tab 8 serving as an electrical pathway to induce the formed current in the battery structure 7 to the outside may be included. An organic electrolyte solution is injected into the battery case 5, and sealed, thereby completing the preparation of the lithium battery 1. The battery case 5 is a rectangular shape. However, the shape is not necessarily limited thereto, and is, for example, a cylindrical shape, a thin film shape, etc.

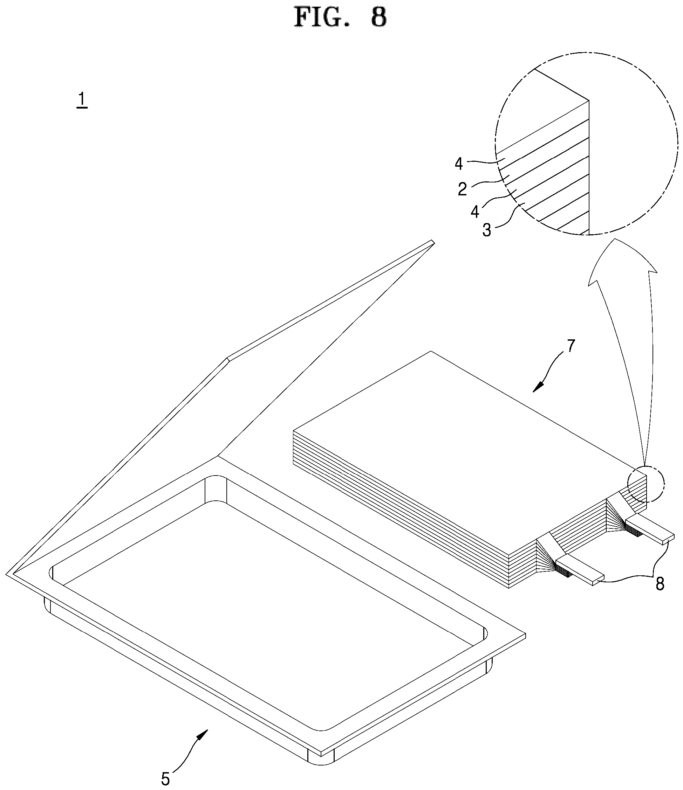

Referring to FIG. 8, a lithium battery 1 according to an embodiment includes a positive electrode 3, a negative electrode 2 and a separator 4. The separator 4 is disposed between the positive electrode 3 and the negative electrode 2 to form a battery structure. The battery structure 7 is stacked in a bi-cell structure, and then is received in a battery case 5. An electrode tab 8 serving as an electrical pathway to induce the formed current in the battery structure 7 to the outside may be included. An organic electrolyte solution is injected into the battery case 5, and sealed, thereby completing the preparation of the lithium battery 1. The battery case 5 is a rectangular shape. However, the shape is not necessarily limited thereto, and is, for example, a cylindrical shape, thin film shape, etc.

Pouch-type or kind lithium batteries correspond to those utilizing a pouch as a battery case in the lithium batteries of FIGS. 6 to 8, respectively. The pouch-type or kind lithium battery includes at least one battery structure. A separator is disposed between a positive electrode and a negative electrode to form a battery structure. The battery structure is stacked in a bi-cell structure, is impregnated in an organic electrolyte solution, and is received in a pouch and sealed to complete the preparation of the pouch-type or kind lithium battery. For example, although not shown in the drawings, the previously-described positive electrode, the negative electrode, and the separator are simply stacked and accommodated in the pouch in the form of an electrode assembly, or are accommodated in the pouch after being wound or folded into an electrode assembly in the form of a jelly roll. Subsequently, an electrolyte solution is injected into the pouch and sealed to complete the preparation of a lithium battery.

The lithium battery has excellent or suitable lifespan characteristics and high-rate characteristics, and thus is utilized, for example, in electric vehicles (EVs). For example, the lithium battery is utilized in hybrid vehicles such as plug-in hybrid electric vehicles (PHEVs). In some embodiments, the lithium battery may be utilized in fields requiring the storage of a large amount of power. For example, the lithium battery may be utilized in electric bikes, motor-driven tools, etc.

A plurality of lithium batteries is stacked to form a battery module, and a plurality of the battery modules form a battery pack. The battery pack may be utilized in all apparatuses requiring high capacity, and high-power output. For example, the battery pack may be utilized in laptop computers, smartphones, electric vehicles, etc. The battery module includes, for example, a plurality of batteries and a frame holding the same. The battery pack includes, for example, a plurality of battery modules and a bus bar connecting the same. The battery module and/or the battery pack may further include a cooling system. A plurality of the battery packs is controlled or selected by a battery management system. The battery management system includes a battery pack, and a battery control device connected to the battery pack.

A method of preparing a composite positive electrode active material according to another embodiment includes: providing a first lithium transition metal oxide; providing a second lithium transition metal oxide; providing a composite; providing a second carbon-based material; preparing a first core/shell structure obtained by mechanically milling the first lithium transition metal oxide, the composite, and the second carbon-based material, and providing a second core/shell structure obtained by mechanically milling the second lithium transition metal oxide, the composite, and the second carbon-based material; and mixing the first core/shell structure and the second core/shell structure, wherein the composite includes at least one first metal oxide represented by Formula $M_aO_b$ ($0<a\leq3$, $0<b\leq4$, and b is not an integer when a is 1, 2, or 3), and a first carbon-based material, the first metal oxide is disposed in a first carbon-based material matrix, M is at least one metal selected from Groups 2 to 13, 15, and 16 of the periodic table of elements, the second carbon-based material includes a fibrous carbon-based material having an aspect ratio of 10 or more, the first lithium transition metal oxide and the second lithium transition metal oxide have different particle diameters, and the second lithium transition metal oxide includes a primary particle having a particle diameter of 1 $\mu$m or more.

The first lithium transition metal oxide is provided. The first lithium transition metal oxide is, for example, a compound represented by previously-described Formulas 1 to 8. The second lithium transition metal oxide is provided. The second lithium transition metal oxide is, for example, a compound represented by the previously-described Formulas 1 to 8. The first lithium transition metal oxide and the second lithium transition metal oxide have different particle diameters. For example, the particle diameter of the first lithium transition metal oxide is larger than the particle diameter of the second lithium transition metal oxide. The second lithium transition metal oxide is, for example, a one-body particle, which is a primary particle having a particle diameter of 1 $\mu$m or more.

The composite is provided. The providing of a composite includes, for example, providing a composite by supplying a reacting gas consisting of carbon source gases to a structure including a metal oxide, and performing a heat treatment. The providing of a composite includes, for example, preparing a composite by supplying a reacting gas consisting of carbon source gases to at least one second metal oxide represented by $M_aO_c$ ($0<a\leq3$, $0<c\leq4$, and c is an integer when a is 1,2, or 3), and performing a heat treatment, and M is at least one metal selected from Groups 2 to 13, 15, and 16 of the periodic table of elements.

The carbon source gas is a gas consisting of a compound represented by Formula 9, or a mixed gas of at least one selected from the group consisting of a compound represented by Formula 9, a compound represented by Formula 10, and an oxygen-containing gas represented by Formula 11.

$$\text{Formula 9} \qquad C_nH_{(2n+2-a)}[OH]_a$$

wherein, in Formula 9, n is 1 to 20, and a is 0 or 1,

$$\text{Formula 10} \qquad C_nH_{2n}$$

wherein, in Formula 10, n is 2 to 6,

$$\text{Formula 11} \qquad C_xH_yO_z$$

wherein, in Formula 11, x is 0 or an integer of 1 to 20, $y$ is 0 or an integer of 1 to 20, and z is 1 or 2.

A compound represented by Formula 9 and a compound represented by Formula 10 are at least one selected from the group consisting of methane, ethylene, propylene, methanol, ethanol, and propanol. Examples of the oxygen-containing gas represented by Formula 11 includes carbon dioxide ($CO_2$), carbon monoxide (CO), water vapor ($H_2O$), or a mixture thereof.

After supplying a reaction gas consisting of a carbon source gas to a second metal oxide represented by $M_aO_c$ ($0<a\leq3$, $0<c\leq4$, and c is an integer when a is 1, 2, or 3) and performing a heat treatment, the cooling may be further performed utilizing at least one inert gas selected from the group consisting of nitrogen, helium and argon. The cooling refers to a process of lowering a temperature to room temperature (about 20 °C to about 25 °C). The carbon source gas may include at least one inert gas selected from the group consisting of nitrogen, helium, and argon.

In the method of preparing a composite, the growing process of a carbon-based material, such as graphene, may be performed under one or more suitable conditions according to a gas phase reaction.

According to a first condition, for example, methane is first supplied into a reactor in which the second metal oxide represented by $M_aO_c$ ($0<a\leq3$, $0<c\leq4$, and c is an integer, when a is 1, 2, or 3) is disposed, and the temperature is increased to a heat treatment temperature (T). Heating time to reach to the heat treatment temperature (T) is about 10 minutes to about 4 hours, and the heat treatment temperature (T) is in a range of about 700 °C to about 1100 °C. A heat treatment is performed at the heat treatment temperature (T) for reaction time. Reaction time is, for example, about 4 hours to about 8 hours. The heat treated resultant material is cooled to room temperature to prepare a composite. The cooling process from the heat treatment temperature (T) to room temperature takes, for example, about 1 hour to about 5 hours.

According to a second condition, for example, hydrogen is supplied into a reactor in which the second metal oxide represented by $M_aO_c$ ($0<a\leq3$, $0<c\leq4$, and c is an integer, when a is 1, 2, or 3) is disposed, and the mixture is heated to the heat treatment temperature (T). The heating time to reach to the heat treatment temperature (T) is about 10 minutes to about 4 hours, and the heat treatment temperature (T) is in a range of about 700 °C to about 1100 °C. After the heat treatment for set or predetermined reaction time at the heat treatment temperature (T), a methane gas is supplied, and the resultant mixture is subjected to a heat treatment for the remained reaction time. Reaction time is, for example, about 4 hours to about 8 hours. The heat treated resulting material is cooled to room temperature to prepare a composite. In the cooling process, nitrogen is supplied. The cooling process from the heat treatment temperature (T) to room temperature takes, for example, about 1 hour to about 5 hours.

According to a third condition, for example, hydrogen is supplied into a reactor in which a second metal oxide represented by $M_aO_c$ ($0<a\leq3$, $0<c\leq4$, and c is an integer, when a is 1, 2, or 3) is disposed, and the mixture is heated to a heat treatment temperature (T). The heating time to reach to the heat treatment temperature (T) is about 10 minutes to about 4 hours, and the heat treatment temperature (T) is in a range of about 700 °C to about 1100 °C. After the heat treatment for a set or predetermined reaction time at the set or predetermined temperature (T), a mixed gas of methane and hydrogen is supplied and then the resultant mixed gas is subjected to a heat treatment for the remaining reaction time. Reaction time is, for example, about 4 hours to about 8 hours. The heat-treated resultant material is cooled to room temperature to prepare a composite. In the cooling process, nitrogen is supplied. The cooling process from the heat treatment temperature (T) to room temperature takes, for example, about 1 hour to about 5 hours.

In the case of the carbon source gas including water vapor in the process of preparing a composite, a composite having very excellent or suitable conductivity may be obtained. An amount of water vapor in the mixed gas is not limited, and is in a range of, for example, about 0.01 volume% to about 10 volume%, with respect to the total 100 volume% of the carbon source gas. Examples of the carbon source gas may include: methane; a mixed gas including methane and an inert gas; or a mixed gas including methane and an oxygen-containing gas.

The carbon source gas may, for example, be: methane; a mixed gas of methane and carbon dioxide; a mixed gas of methane, carbon dioxide and water vapor. In the mixed gas of methane and carbon dioxide, a molar ratio of methane to carbon dioxide is about 1: 0.20 to about 1: 0.50, about 1: 0.25 to about 1: 0.45, or about 1: 0.30 to about 1: 0.40. In the mixed gas of methane, carbon dioxide, and water vapor, a molar ratio of methane to carbon dioxide to water vapor is about 1: 0.20 to about 0.50: 0.01 to about 1.45, about 1: 0.25 to about 0.45: 0.10 to about 1.35, or about 1: 0.30 to about 0.40: 0.50 to about 1.0.

The carbon source gas is, for example, carbon monoxide or carbon dioxide. The carbon source gas is, for example, a mixed gas of methane and nitrogen. In the mixed gas of methane and nitrogen, a molar ratio of methane to nitrogen is about 1: 0.20 to about 1: 0.50, about 1: 0.25 to about 1: 0.45, or about 1: 0.30 to about 1: 0.40. The carbon source gas may not include (e.g., may exclude) an inert gas, such as nitrogen.

A heat treatment pressure may be selected in consideration of the heat treatment temperature, a composition of a gas mixture, and a desired or suitable amount of carbon coating. The heat treatment pressure may be controlled or selected by adjusting an amount of the gas mixture flowing in and an amount of the gas mixture flowing out. The heat treatment pressure is, for example, 0.5 atm or more, 1 atm or more, 2 atm or more, 3 atm or more, 4 atm or more, or 5 atm or more. The heat treatment pressure is, for example, about 0.5 atm to about 10 atm, about 1 atm to about 10 atm, about 2 atm to about 10 atm, about 3 atm to about 10 atm, about 4 atm to about 10 atm, or about 5 atm to about 10 atm.

The heat treatment time is not particularly limited and may be suitably adjusted in consideration of the heat treatment temperature, a pressure during the heat treatment, a composition of a gas mixture, and a desired or suitable amount of carbon coating. For example, reaction time at the heat treatment temperature is, for example, about 10 minutes to about 100 hours, about 30 minutes to about 90 hours, or about 50 minutes to about 40 hours. For example, as the heat treatment time increases, an amount of carbon to be deposited, such as an amount of graphene (carbon), increases, and thus electrical physical properties of the composite may have improved. However, such a tendency may not be necessarily direct proportional to time. For example, no more carbon deposition, such as graphene deposition, occurs, or a deposition rate may be reduced after a set or predetermined time.

Through a gas phase reaction of the previously-described carbon source gas, a carbon-based material, such as a graphene, is substantially uniformly coated on at least one selected from: a second metal oxide represented by $M_aO_c$ (0<a≤3, 0<c≤4, and c is an integer, when a is 1, 2, or 3); and, a reduction product thereof, a first metal oxide, represented by $M_aO_b$ (0<a≤3, 0<b<4, b is not an integer when a is 1, 2, or 3) to enable obtaining a composite even at a relatively low-temperature.

The composite, for example, includes a carbon-based material matrix, such as a graphene matrix, having at least one structure selected from a spherical structure, a spiral structure in which a plurality of spherical structures are connected, a cluster structure in which a plurality of spherical structures are aggregated, and a sponge structure and at least one of the first metal oxide represented by $M_aO_b$ (0<a≤3, 0<b<4, and b is not an integer when a is 1, 2, or 3), and the second metal oxide represented by $M_aO_c$ (0<a≤3, 0<c≤4, c is an integer when a is 1, 2, or 3) which are disposed in the graphene matrix.

Next, a first core/shell structure is prepared by mechanically milling the first lithium transition metal oxide and the composite. In the case of milling, a Nobilta mixer and/or the like may be utilized. The number of revolutions of the mixer during milling is, for example, 1000 rpm to 5000 rpm. Milling time is, for example, about 5 minutes to about 100 minutes. A second composite utilized in the mechanical milling of the first lithium transition metal oxide and the composite has an average particle diameter (D50) of, for example, about 50 nm to about 200 nm, about 100 nm to about 300 nm, or about 200 nm to about 500 nm. In the mechanical milling, a milling method is not particularly limited, any method available in the art as a method of contacting the lithium transition metal oxide and the composite utilizing a machine may be utilized.

In some embodiments, a second core/shell structure is prepared by mechanically milling the second lithium transition metal oxide and the composite. The second core/shell structure may be prepared in substantially the same manner as a method of preparing the first core/shell structure except for utilizing a second lithium transition metal oxide in place of the first lithium transition metal oxide.

Next, the first core/shell structure and the second core/shell structure are mixed to prepare a composite positive electrode active material. A mixing weight ratio of the first core/shell structure to the second core/shell structure may be, for example, about 90:10 to about 60:40, about 85:15 to about 65:35, or about 80:20 to about 70:30. In the case of the weight ratio of the first core/shell structure to the second core/shell structure falling within the range above, a lithium battery including the composite positive electrode active material may have the improved energy density and/or cycle characteristics.

The present disclosure will be described in more detail through Examples and Comparative Examples hereafter. However, Examples are provided to illustrate the present disclosure, and the scope of the present disclosure is not limited thereto.

**Preparation of composite**

Preparation Example 1: $Al_2O_3$@Gr composite

An $Al_2O_3$ particle (having an average particle diameter of about 20 nm) was put into a reactor, $CH_4$ was supplied into the reactor at about 300 sccm and 1 atm for about 30 minutes, and an internal temperature of the reactor was raised to 1000 °C.

Subsequently, a heat treatment was performed maintaining the above temperature for 7 hours. Subsequently, the internal temperature of the reactor was cooled to room temperature (about 20 °C to about 25 °C) to obtain a composite in which an $Al_2O_3$ particle and $Al_2O_z$ (0<z<3) particle, which is a reduction product thereof, were embedded in graphene.

An amount of alumina included in the composite was 60 wt%.

Comparative Preparation Example 1: $SiO_2$@Gr composite

An $SiO_2$ particle (having an average particle diameter of about 15 nm) was put into a reactor, $CH_4$ was supplied into the reactor at about 300 sccm and 1 atm for about 30 minutes, and an internal temperature of the reactor was raised to 1000 °C.

Subsequently, a heat treatment was performed maintaining the above temperature for 7 hours. Subsequently, the internal temperature of the reactor was cooled to room temperature (about 20 °C to about 25 °C) to obtain a composite in which an $SiO_2$ particle and $SiO_y$ (0<y<2) particle, which is a reduction product thereof, were embedded in graphene.

**Preparation of composite positive electrode active material**

**Example 1: Large-diameter NCA91 coated with 0.15 wt% of a $Al_2O_3$@Gr composite (0.09 wt% of alumina) and 0.05 wt% of CNT, and small-diameter one-body particle NCA91 coated with 0.15 wt% of $Al_2O_3$@Gr composite (0.09 wt% of alumina) and 0.05 wt% of CNT**

A large-diameter $LiNi_{0.91}Co_{0.05}Al_{0.04}O_2$ (hereinafter, referred to as a large-diameter NCA91) having an average particle diameter of 10 $\mu$m, the composite prepared in Preparation Example 1, and a carbon nanotube (hereinafter, referred to as a CNT) were milled utilizing a Nobilta mixer (made by Hosokawa, Japan) at the revolution number of about 1000 rpm to about 2000 rpm for 30 minutes to obtain a first core/shell structure. A mixing weight ratio of the large-diameter NCA91 to the composite prepared according to Preparation Example 1 to a CNT was 99.8: 0.15: 0.05. The large-diameter NCA91 is a secondary particle in which a plurality of primary particles is aggregated.

A small-diameter $LiNi_{0.91}Co_{0.05}Al_{0.04}O_2$ (hereinafter, referred to as a small-diameter NCA91) having an average particle diameter of 3 $\mu$m, the composite prepared in Preparation Example 1, and a CNT were milled utilizing a Nobilta mixer (made by Hosokawa, Japan) at the revolution numbers of about 1000 rpm to about 2000 rpm for about 5 minutes to about 30 minutes to obtain a second core/shell structure. A mixing weight ratio of the small-diameter NCA91 to the composite prepared according to Preparation Example 1 to a CNT was 99.8: 0.15: 0.05. The small-diameter NCA91 has a one-body particle shape, and is a particle having a single crystal structure.

The first core/shell structure and the second core/shell structure were mixed in a weight ratio of 7:3 to prepare a composite positive electrode active material.

Particle size distribution was measured utilizing a particle size analyzer (PSA), and as a result, it could be seen that the composite positive electrode active material had a bimodal particle size distribution.

As shown in FIG. 3, it can be seen that a carbon nanotube was disposed on a surface of the large-diameter NCA91 secondary particle of the first core/shell structure. The carbon nanotube includes a carbon nanotube primary structure and a carbon nanotube secondary structure formed by aggregation of a plurality of carbon nanotube units. The carbon nanotube primary structure is formed of one carbon nanotube unit. A length of the carbon nanotube unit was about 200 nm to about 300 nm, and a diameter of the carbon nanotube was about 10 nm. The carbon nanotube secondary structure is formed by aggregation of a plurality of carbon nanotube units. A length of the carbon nanotube secondary structure was 500 nm or more, and a diameter of the carbon nanotube was about 40 nm.

As shown in FIG. 3, it can be seen that a carbon nanotube is disposed on a surface of the small-diameter NCA91 one-body particle of the second core/shell structure. The carbon nanotube includes a carbon nanotube primary structure.

**Example 2: Large-diameter NCA91 coated with 0.17 wt% of a $Al_2O_3$@Gr composite and 0.03 wt% of CNT, and small-diameter one-body particle NCA91 coated with 0.17 wt% of a $Al_2O_3$@Gr Composite and 0.03 wt% of CNT**

A composite positive electrode active material was prepared in substantially the same manner as in Example 1 except that a mixing weight ratio of a composite to a carbon nanotube was changed from 0.15:0.05 to 0.17:0.03.

**Example 3: Large-diameter NCA91 coated with 0.19 wt% of a $Al_2O_3$@Gr composite and 0.01 wt% of CNT and small-diameter one-body particle NCA91 coated with 0.19 wt% of a $Al_2O_3$@Gr composite and 0.01 wt% of CNT**

A composite positive electrode active material was prepared in substantially the same manner as in Example 1 except that a mixing weight ratio of the composite to a carbon nanotube was changed from 0.15:0.05 to 0.19:0.01.

**Example 4: Large-diameter NCA91 coated with 0.10 wt% of a $Al_2O_3$@Gr composite and 0.01 wt% of CNT, and small-diameter one body particle NCA91 coated with 0.10 wt% of a $Al_2O_3$@Gr composite and 0.10 wt% of CNT**

A composite positive electrode active material was prepared in substantially the same manner as in Example 1 except that a mixing weight ratio of the composite to a carbon nanotube was changed from 0.15:0.05 to 0.10:0.10.

**Comparative Example 1: Bare large-diameter NCA91 and bare small-diameter one-body particle NCA91**

A composite positive electrode active material was prepared in substantially the same manner as in Example 1 except that a large-diameter NCA91 was utilized as it is in place of the first core/shell structure, and a small-diameter NCA91 was utilized as it is in place of the second core/shell structure.

**Comparative Example 2: Large-diameter NCA91 coated with 0.15 wt% of $Al_2O_3$@Gr composite (0.09 wt% of alumina) and 0.05 wt% of CNT and small-diameter secondary particle NCA91 coated with 0.15 wt% of $Al_2O_3$@Gr Composite (0.09 wt% of alumina) and 0.05 wt% of CNT**

A composite positive electrode active material was prepared in substantially the same manner as in Example 1 except that a small-diameter NCA91, which is a secondary particle in which a plurality of primary particles was aggregated, was utilized in place of a small-diameter NCA91, which is a one-body (e.g., monolithic) particle.

**Comparative Example 3: Large-diameter NCA91 coated with only $Al_2O_3$@Gr composite of 0.2 wt% and small-diameter one-body particle NCA91 coated solely with $Al_2O_3$@Gr composite of 0.2 wt%**

A composite positive electrode active material was prepared in substantially the same manner as in Example 1 except that a mixing weight ratio of the composite to the carbon nanotube was changed from 0.15:0.05 to 0.20:0.

**Comparative Example 4: Large-diameter NCA91 coated solely with CNT of 0.2 wt% and small-diameter one-body particle NCA91 coated solely with CNT of 0.2 wt%**

A composite positive electrode active material was prepared in substantially the same manner as in Example 1 except that a mixing weight ratio of the composite to a carbon nanotube was changed from 0.15:0.05 to 0:0.2.

**Comparative Example 5: Large-diameter NCA91 coated with 0.15 wt% of $SiO_2$@Gr composite (0.09 wt% of silica) and 0.05 wt% of CNT and small-diameter one-body particle NCA91 coated with 0.15 wt% of $SiO_2$@Gr composite (0.09 wt% of silica) and 0.05 wt% of CNT**

A composite positive electrode active material was prepared in substantially the same manner as in Example 1 except that a $SiO_2$@Gr composite prepared in Comparative Preparation Example 1 was utilized in place of the $Al_2O_3$@Gr composite prepared in Preparation Example 1.

**Preparation of lithium battery (half cell), wet method**

**Example 5**

**Preparation of positive electrode**

The composite positive electrode active material prepared in Example 1, a carbon conductive material, and polyvinylidene fluoride (PVdF) were mixed in a mole ratio of 98.85: 0.5: 0.65, and then the mixture was mixed with N-methylpyrrolidone (NMP) in an agate mortar to prepare a slurry.

As the carbon conductive material, a mixture of a carbon nanotube (CNT) and ketjen black (ECP) in a weight ratio of 7:3 was utilized.

An aluminium current collector having a thickness of 15 $\mu$m was bar coated with the slurry, dried at room temperature, then dried again under vacuum and 120 °C conditions, and then rolled and punched to prepare a positive electrode having a thickness of 60 $\mu$m.

**Preparation of coin cell**

Each coin cell was prepared by utilizing the above-prepared positive electrode, a lithium metal as a counter electrode, and a PTFE separator and a solution, in which 1.5 M $LiPF_6$ was dissolved in ethylene carbonate (EC) + ethyl methyl carbonate (EMC) + and dimethyl carbonate (DMC) (in a volume ratio of 2: 1: 7) as an electrolyte.

**Examples 6 to 8**

Coin cells were prepared in substantially the same manner as in Example 5 except for utilizing composite positive electrode active materials prepared in Examples 2 to 4, respectively, in place of the composite positive electrode active material prepared in Example 1.

**Comparative Examples 6 to 10**

Coin cells were prepared in substantially the same manner as in Example 5 except for utilizing composite positive electrode active materials according to Comparative Examples 1 to 5, respectively, in place of the composite positive electrode active material prepared in Example 1.

**Evaluation Example 1: XPS spectrum evaluation**

In the process of preparing the composite prepared in Preparation Example 1, XPS spectrum was measured utilizing Quantum 2000 (made by Physical Electronics) as time elapsed. XPS spectra of a C 1s orbital and an Al 2p orbital were measured for a sample before heating, after 1 minute, after 5 minutes, after 30 minutes, after 1 hour, and after 4 hours, respectively. Only a peak of the Al 2p orbital was observed, and a peak of the C 1s orbital was not observed at an initial stage of heating. After 30 minutes, the peak of the C 1s orbital was clearly observed, and a size of the peak of the Al 2p orbital was significantly reduced.

After 30 minutes, the peak of the C 1s orbital due to a C-C bond and a C=C bond by the growth of graphene was clearly observed near 284.5 eV.

As the reaction time elapsed, the oxidation number of aluminium was reduced, causing a shift in the peak position of the Al 2p orbital to a lower binding energy (eV).

Therefore, it can be seen that, as the reaction processed, graphene was grown on an $Al_2O_3$ particle, and $Al_2O_z$ (0<z<3), which is a reduction product of $Al_2O_3$, was formed.

Average amounts of carbon and aluminium were measured through XPS analysis results in 10 regions of the composite samples prepared in Preparation Example 1. The deviation of the aluminium amount for each region was calculated from the measurement results. The deviation of the aluminium amount was expressed as a percentage of an average value and was referred to as uniformity. Percentage of the average value of the deviation of the aluminium amount, that is, uniformity of the aluminium amount, was 1%. Therefore, it can be seen that alumina was uniformly distributed in the composite prepared in Preparation Example 1.

**Evaluation Example 2: SEM, HR-TEM and SEM-EDS analysis**

The composite prepared in Preparation Example 1, the first core/shell structure prepared in Example 1, and a bare large-diameter NCA91 prepared in Comparative Example 1 were analyzed by scanning electron microscopy, high-resolution transmission electron microscopy (HR-TEM) and energy-dispersive X-ray spectroscopy (EDS) analysis.

In SEM-EDS analysis, FEI Titan 80-300 made by Philips Co., Ltd, was utilized.

It was shown that the composite prepared in Preparation Example 1, had a structure in which a $Al_2O_3$ particle and a reduction product thereof, a $Al_2O_z$ (0<z<3) particle, were embedded in graphene. It was confirmed that a graphene layer was disposed on the outside of at least one particle selected from $Al_2O_3$ particle and $Al_2O_z$ particle (0<z<3). At least one particle selected from $Al_2O_3$ particle and $Al_2O_z$ particle (0<z<3) was uniformly dispersed in the graphene matrix. At least one of the $Al_2O_3$ particle or $Al_2O_z$ (0<z<3) particle had a particle diameter of about 20 nm. The composite prepared in Preparation Example 1 had a particle diameter of about 50 nm to about 200 nm.

It can be seen that the shell formed by a composite including graphene was disposed on a large-diameter NCA91 core in the first core/shell structure prepared in Example 1.

It can be seen that, in the SEM-EDS mapping analysis for the large-diameter NCA91 in Comparative Example 1 and the first core/shell structure prepared in Example 1, a concentration of aluminium (Al) distributed on a surface of the first core/shell structure of Example 1 increased compared to the surface of the bare NCA91 according to Comparative Example 1. It can be seen that, in the first core/shell structure of Example 1, the composite prepared in Preparation Example 1 was applied on a large-diameter NCA91 to form a shell.

**Evaluation** Example 3: XPS spectrum evaluation (Graphene-NCA chemical bond)

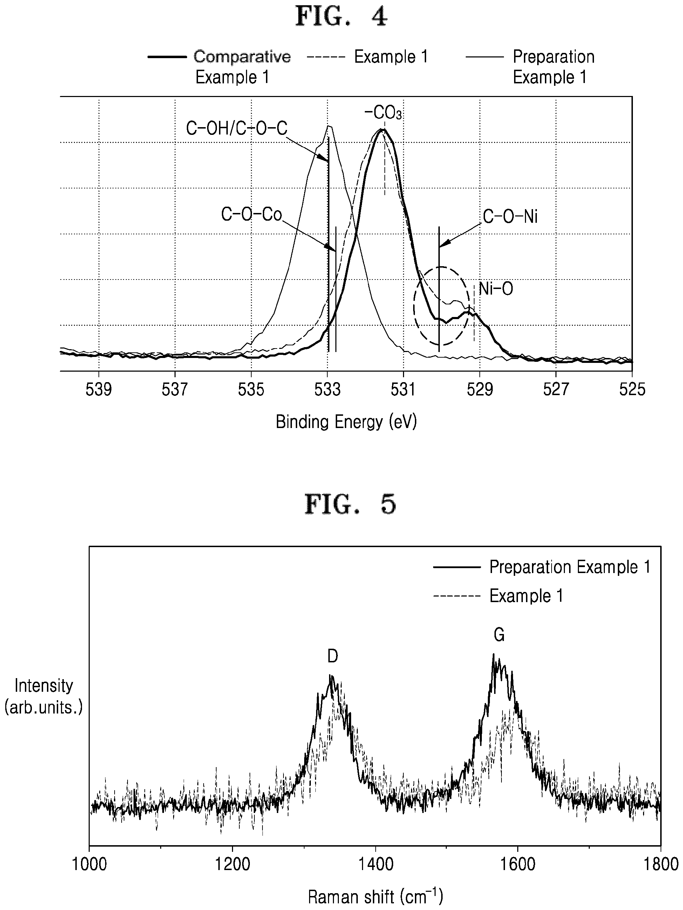

The XPS spectra were measured for the O 1s orbital in the composite prepared in Preparation Example 1, the bare large-diameter NCA91 of Comparative Example 1, and the first core/shell structure prepared in Example 1 utilizing Quantum 2000 (made by Physical Electronics). The measurement results were illustrated in FIG. 4.

As shown in FIG. 4, a peak due to a C-O-Ni bond was observed at near 530.2 eV for the composite positive electrode active material of Example 1. The peak was determined to be due to a bond formed between the NiO phase present on the surface of NCA91 and carbon of graphene. Therefore, it can be seen that graphene including a shell formed on the core forms a covalent bond with Ni, which is a transition metal included in the core.

**Evaluation Example 4: Raman spectrum Evaluation (Graphene-NCA chemical bond)**

Raman spectra were measured for the composite prepared in Preparation Example 1, and the first core/shell structure prepared in Example 1, and measurement results were illustrated in FIG. 5.

As shown in FIG. 5, the composite prepared in Preparation Example 1 exhibited a D-band peak at 1338.7 cm$^{-1}$ and a G-band peak at 1575.0 cm$^{-1}$ which were due to graphene.

In contrast, in the first core/shell structure according to Example 1, the D-band peak was shifted to 1351.3 cm$^{-1}$ by 12 cm$^{-1}$, and the G-band peak was shifted to 1593.6 cm$^{-1}$ by 18 cm$^{-1}$ compared to the shell including graphene.

It was considered that the shift of the D-band peak was due to a strain of graphene that formed the shell by being bonded to the core by milling.

It was determined that, as the core and graphene formed a composite by a C-O-Ni bond, the shift of the G-band peak was due to a charge transfer between the core and the graphene in the composite.

Accordingly, it can be seen that graphene included in the shell formed on the core forms a covalent bond with a transition metal Ni included in the core.

**Evaluation Example 5: Evaluation of High-temperature (45 °C) charging and discharging characteristics**

Lithium batteries prepared in Examples 5 to 8, and Comparative Examples 6 to 10 were each charged at a constant current of 0.1 C rate at 25° C until the voltage reached 4.3 V (vs. Li) and then the charging was cut off at a current of 0.05 C rate while maintaining a voltage of 4.3 V in the constant voltage mode. Subsequently, a constant current discharging was executed at a current rate of 0.1 C until the voltage reached 2.8 V (vs. Li) (formation cycle).

The lithium batteries that underwent the formation cycle were charged at a constant current of 0.2 C rate at 45° C until the voltage reached 4.3 V (vs. Li) and then the charging was cut off at a current of 0.05 C rate while maintaining a voltage of 4.3 V in the constant voltage mode. Subsequently, a constant current discharging was executed at a current rate of 0.2 C until the voltage reached 2.8 V (vs. Li) (1st cycle) during discharging. The described cycles were executed repeatedly 50 times.

For each cycle, once the battery was charged and discharged, and then the battery rested for about 10 minutes. Partial results from an experiment on high-temperature charging and discharging were listed in Table 3. Initial efficiency is defined as Equation 1, and a capacity retention ratio is defined as Equation 2.

Equation 1

Initial efficiency [%] = [discharge capacity for 1st cycle / charge capacity for 1st cycle] ×

100

Equation 2

Capacity retention ratio [%] = [discharge capacity for 50th cycle / discharge capacity for

1st cycle] × 100

Table 1

|  | Capacity retention rate [%] |
|---|---|
| Example 5 coated with $Al_2O_3$@Gr composite 0.15 wt% + CNT 0.05 wt% | 94.3 |
| Example 6 coated with $Al_2O_3$@Gr composite 0.17 wt% + CNT 0.03 wt% | 96.8 |
| Example 7 coated with $Al_2O_3$@Gr composite 0.19 wt% + CNT 0.01 wt% | 94.9 |
| Example 8 coated with $Al_2O_3$@Gr composite 0.10 wt% + CNT 0.10 wt% | 95.5 |
| Comparative Example 6 uncoated | 89.8 |
| Comparative Example 8 coated solely with $Al_2O_3$@Gr composite 0.2 wt% | 93.5 |
| Comparative Example 9 coated solely with CNT 0.2 wt% | 84.5 |

As shown in Table 1, the lithium batteries of Examples 5 to 8 have improved high-temperature lifespan characteristics than lithium batteries of Comparative Examples 6, 8, and 9.

The lithium battery according to Comparative Example 9 has the poorest high-temperature lifespan characteristics. It was considered due to the fact that uniformity of the positive electrode active material layer was reduced by exfoliation of CNT in a coating layer from the core in a slurry for forming a positive electrode including a composite positive electrode active material, in which only CNT was disposed on the NCA91 core, in the preparation process of the lithium battery of Comparative Example 9.

Although not shown in Table 1, lithium batteries of Comparative Examples 7 and 10 had poor high-temperature lifespan characteristics than the lithium battery of Example 5.

It was considered due to the fact that, in the lithium battery according to Comparative Example 7, by utilizing a secondary particle as a small-diameter NCA91 particle, causes an increase in resistance on a particle surface during charging and discharging, thereby resulting in rapidly deterioration of the small-diameter NCA91 particle.

It was considered due to the fact that, in the lithium battery according to Comparative Example 10, high-voltage stability of the $SiO_2$@Gr composite disposed on the NCA91 core was poor.

**Evaluation Example 6: Evaluation of direct current Internal resistance (DC-IR) before and after high-temperature charging and discharging**

Direct current internal resistance (DC-IR) was measured for each of the lithium batteries prepared in Examples 5 to 8, and Comparative Examples 6 to 10, by a following method before and after the high-temperature charging and discharging evaluation.

After charging the battery at a current of 0.2 C to a voltage at a state of charge (SOC) of 50 % in a 1st cycle, a constant current discharging was executed at a current rate of 3.0 C for 10 seconds, subsequently, a constant current discharging was executed at a current rate of 0.2 C for 10 seconds, and then finally discharging was executed at a current rate of 3.0 C for 10 seconds.

Direct current internal resistance (DC-IR, R= $\Delta V/\Delta I$) was calculated from the ratio of average voltage change ($\Delta V$) to average current change ($\Delta I$) during constant current discharging at each C-rate. The resulting values were averaged, and the average value was considered as the measured internal resistance of the system.

The direct current internal resistance was measured before and after high-temperature charging and discharging evaluation, and the partial measurement results were listed in Table 2.

Table 2

| | Initial efficiency [%] | Initial DC-IR [ohm] | DC-IR after 50th cycle [ohm] |
|---|---|---|---|
| Example 5 coated with $Al_2O_3$@Gr composite 0.15 wt% + CNT 0.05 wt% | 87.7 | 4.5 | 8.2 |
| Example 6 coated with $Al_2O_3$@Gr composite 0.17 wt% + CNT 0.03 wt% | 88.5 | 4.0 | 7.1 |
| Comparative Example 6 uncoated | 87.1 | 4.9 | 12.1 |

As shown in Table 2, the lithium batteries of Examples 5 and 6 had improved initial efficiency, and an increase in direct current internal resistance was suppressed or reduced compared to a lithium battery according to Comparative Example 6.

Although not shown in Table 2, lithium batteries of Examples 7 and 8 had improved initial efficiency, and an increase in direct current internal resistance was suppressed or reduced compared to the lithium battery according to Comparative Example 6.

**Evaluation Example 7: Evaluation of room temperature high-rate characteristics**

The lithium batteries prepared according to Examples 5 to 8, and Comparative Examples 6 to 10 were each charged at a constant current of 0.1 C rate at 25° C, until the voltage reached 4.3 V (vs. Li) and then the charging was cut off at a current of 0.05 C rate while maintaining 4.3 V in constant voltage mode. Subsequently, a constant current discharging was executed at a current rate of 0.1 C until the voltage reached 2.8 V (vs. Li) during discharging (formation cycle).

The lithium battery that underwent the formation cycle was charged at a constant current of 0.2 C rate at 25° C, until the voltage reached 4.3 V (vs. Li) and then while maintaining 4.3 V in the constant voltage mode, the charging was cut off at a current of 0.05 C rate. Subsequently, a constant current discharging was executed at a current rate of 0.2 C until the voltage reached 2.8 V (vs. Li) (1st cycle).

The lithium battery underwent the 1st cycle was constant current charged at a current rate of 0.2 C at 25° C until the voltage reached 4.3 V (vs. Li) and then the charging was cut off at a current of 0.05 C rate while maintaining 4.3 V in the constant voltage mode. Subsequently, a constant current discharging was executed at a current rate of 0.5 C until the voltage reached 2.8 V (vs. Li) (2nd cycle).

The lithium battery underwent the 2nd cycle was constant current charged at a current of 0.2 C rate at 25° C until the voltage reached 4.3 V (vs. Li) and then the charging was cut off at a current of 0.05 C rate, while maintaining 4.3 V in the constant voltage mode. Subsequently, a constant current discharging was executed at a current rate of 1.0 C until the battery voltage reached 2.8 V (vs. Li) (3rd cycle).

For each cycle, once the battery was charged and discharged, and then the battery rested for about 10 minutes. Partial results of the high-rate characteristics experiment were listed in Table 3. The high-rate characteristics are defined by Equation 3.

Equation 3

high-rate characteristics [%] = [1.0 C rate discharge capacity (3th cycle discharge

capacity / 0.2 C rate discharge capacity (1st cycle discharge capacity)

Table 3

| | High-rate characteristics [%] |
|---|---|
| Example 5 coated with $Al_2O_3$@Gr composite 0.15 wt% + CNT 0.05 wt% coating | 95.5 |

(continued)

| | High-rate characteristics [%] |
|---|---|
| Example 6 coated with $Al_2O_3$@Gr composite 0.17 wt% + CNT 0.03 wt% | 96.5 |
| Example 7 coated with $Al_2O_3$@Gr composite 0.19 wt% + CNT 0.01 wt% | 94.6 |
| Example 8 coated with $Al_2O_3$@Gr composite 0.10 wt% + CNT 0.10 wt% | 94.0 |
| Comparative Example 6 uncoated | 93.7 |

As shown in Table 3, the lithium batteries according to Examples 5 to 8 had an improved high-rate characteristics than Comparative Example 6.

According to an aspect, because a composite positive electrode active material includes a core and a shell, wherein the shell is disposed on a large-diameter lithium transition metal oxide core and a small-diameter lithium transition metal oxide core, the shell includes a first metal oxide, a first carbon-based material, and a second carbon-based material, and the small-diameter lithium transition metal oxide has one-body particle shape, a lithium battery including the composite positive electrode active material has improved high-temperature cycle characteristics, suppressed or reduced internal resistance increase, and improved high-rate characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the disclosure as defined by the following claims and equivalents thereof.

**Claims**

1. A composite positive electrode active material comprising:

   a first core comprising a first lithium transition metal oxide;
   a second core comprising a second lithium transition metal oxide; and
   a shell along a surface of at least one of the first core and the second core,
   wherein the shell comprises a first metal oxide, a first carbon-based material, and a second carbon-based material,
   the first metal oxide is in a first carbon-based material matrix,
   the first metal oxide is represented by a formula of $M_aO_b$ (0<a≤3, 0<b<4, and b is not an integer if a is 1, 2, or 3), M being at least one metal selected from Groups 2 to 13, 15, and 16 of the periodic table of elements,
   the second carbon-based material comprises a fibrous carbon-based material having an aspect ratio of 10 or more,
   the first lithium transition metal oxide and the second lithium transition metal oxide respectively have different particle diameters from each other, and
   the second lithium transition metal oxide comprises a primary particle having a particle diameter of 1 $\mu$m or more.

2. The composite positive electrode active material of claim 1, wherein the first lithium transition metal oxide comprises a secondary particle comprising a plurality of the primary particles, and
   the second lithium transition metal oxide comprising the primary particle is secondary particle free.

3. The composite positive electrode active material of claim 1 or claim 2, wherein the first lithium transition metal oxide is a large-diameter lithium transition metal oxide having a larger particle diameter than that of the second lithium transition metal oxide, and
   the second lithium transition metal oxide is a small-diameter lithium transition metal oxide having a smaller particle diameter than that of the first lithium transition metal oxide.

4. The composite positive electrode active material of any one of claims 1 to 3, wherein:

   (i) the first lithium transition metal oxide and the second lithium transition metal oxide have a bimodal particle diameter distribution in a particle size distribution diagram, and
a particle diameter ratio of the first lithium transition metal oxide to the second lithium transition metal oxide is about 3:1 to about 40:1; and/or
(ii) the first lithium transition metal oxide has a particle diameter of greater than about 8 $\mu$m and not more than about 30 $\mu$m, and the second lithium transition metal oxide has a particle diameter of about 1 $\mu$m or more, and less than about 8 $\mu$m; and/or
(iii) a weight ratio of the first lithium transition metal oxide to the second lithium transition metal oxide is about 90:10 to about 60:40.

5. The composite positive electrode active material of any one of claims 1 to 4, wherein the second carbon-based material comprises carbon nanofibers, carbon nanotubes, or a combination thereof,

the carbon nanotubes comprise a carbon nanotube primary structure, a carbon nanotube secondary structure formed by aggregation of a plurality of carbon nanotube primary structures, or a combination thereof, and
the carbon nanotube primary structure is one carbon nanotube unit.

6. The composite positive electrode active material of claim 5, wherein:

(i) the carbon nanotubes comprise the carbon nanotube primary structure,

the carbon nanotube primary structure comprises a single-walled carbon nanotube (SWCNT), a double-walled carbon nanotube (DWCNT), a multi-walled carbon nanotube (MWCNT), or a combination thereof, and
the carbon nanotube primary structure has a diameter of about 1 nm to about 20 nm, and a length of about 100 nm to about 2 $\mu$m; or

(ii) the carbon nanotubes comprise the carbon nanotube secondary structure,

the carbon nanotube secondary structure comprises bundle-type carbon nanotubes, a rope-type nanotubes, or a combination thereof, and
the carbon nanotube secondary structure has a diameter of about 2 nm to about 50 nm, and a length of about 500 nm to about 1000 $\mu$m.

7. The composite positive electrode active material of any one of claims 1 to 6, wherein an amount of the second carbon-based material is about 0.1 wt% to about 50 wt%, with respect to the total weight of the first carbon-based material and the second carbon-based material,

an amount of the second carbon-based material is about 0.001 wt% to about 5 wt%, with respect to the total weight of the composite positive electrode active material, and
the second carbon-based material is on a surface of the composite positive electrode active material.

8. The composite positive electrode active material of any one of claims 1 to 7, wherein a first metal in the first metal oxide is at least one selected from Al, Nb, Mg, Sc, Ti, Zr, V, W, Mn, Fe, Co, Pd, Cu, Ag, Zn, Sb, and Se, and the first metal oxide is at least one selected from $Al_2O_z(0<z<3)$, $NbO_x(0<x<2.5)$, $MgO_x(0<x<1)$, $Sc_2O_z(0<z<3)$, $TiO_y(0<y<2)$, $ZrO_y(0<y<2)$, $V_2O_z(0<z<3)$, $WO_y(0<y<2)$, $MnO_y(0<y<2)$, $Fe_2O_z(0<z<3)$, $Co_3O_w(0<w<4)$, $PdO_x(0<x<1)$, $CuO_x(0<x<1)$, $AgO_x(0<x<1)$, $ZnO_x(0<x<1)$, $Sb_2O_z(0<z<3)$, and $SeO_y(0<y<2)$.

9. The composite positive electrode active material of any one of claims 1 to 8, wherein the shell comprises a second metal oxide,

the second metal oxide is represented by Formula $M_aO_c$ ($0<a\leq3$, $0<c\leq4$, and c is an integer if a is 1, 2, or 3),
the second metal oxide comprises the same metal as the first metal oxide,
c/a in $M_aO_c$ of the second metal oxide, which is a ratio of c to a of the second metal oxide, is larger than b/a in $M_aO_b$ of the first metal oxide, which is a ratio of b to a in the first metal oxide, and
the second metal oxide is in the first carbon-based material matrix, optionally wherein the second metal oxide is selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$, and
the first metal oxide is a reduction product of the second metal oxide.

**10.** The composite positive electrode active material of any one of claims 1 to 9, wherein:

the first carbon-based material in the shell and the first and second lithium transition metal oxides in the first and second cores are chemically bound through chemical bonding;

a carbon atom (C) in the first carbon-based material in the shell and a transition metal (Me) in the first and second lithium transition metal oxide are chemically bound through a C-O-Me bond via an oxygen atom; and/or

the first metal oxide is chemically bound to a first carbon-based material through chemical bonding.

**11.** The composite positive electrode active material of any one of claims 1 to 10, further comprising a third metal doped on at least one of the first and second core, or a third metal oxide coated on at least one of the first and second cores,

wherein the shell is on the third metal oxide, and

the third metal oxide is an oxide of at least one third metal selected from Al, Zr, W, and Co.

**12.** The composite positive electrode active material of any one of claims 1 to 11, wherein:

(i) the shell has a thickness of about 10 nm to about 2 $\mu$m,

the shell has a single-layer structure, or a multilayer structure,

the shell is a dry coating layer, and

an amount of the shell is 5 wt% or less, with respect to the total weight of the composite positive electrode active material; and/or

(ii) the first and second lithium transition metal oxides are each independently represented by one selected from Formulas 1 to 8:

Formula 1         $Li_aNi_xCo_yM_zO_{2-b}A_b$

wherein, in Formula 1,

$1.0 \leq a \leq 1.2$, $0 \leq b \leq 0.2$, $0.8 \leq x < 1$, $0 \leq y < 0.2$, $0 < z < 0.2$, and $x+y+z=1$,

M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and

A is F, S, Cl, Br, or a combination thereof,

Formula 2         $LiNi_xCo_yMn_zO_2$,

Formula 3         $LiNi_xCo_yAl_zO_2$,

wherein, in Formulas 2 and 3, $0.8 \leq x \leq 0.95$, $0 \leq y < 0.2$, $0 < z \leq 0.2$ and $x+y+z=1$,

Formula 4         $LiNi_xCo_yMn_zAl_wO_2$,

wherein, in Formula 4, $0.8 \leq x \leq 0.95$, $0 \leq y < 0.2$, $0 < z < 0.2$, $0 < w < 0.2$, and $x+y+z+w=1$,

Formula 5         $Li_aCO_xM_yO_{2-b}A_b$,

wherein, in Formula 5,

$1.0 \leq a \leq 1.2$, $0 \leq b \leq 0.2$, $0.9 \leq x \leq 1$, $0 \leq y \leq 0.1$, and $x+y=1$,

M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and

A is F, S, Cl, Br, or a combination thereof,

Formula 6         $Li_aNi_xMn_yM'_zO_{2-b}A_b$,

wherein, in Formula 6,

1.0≤a≤1.2, 0≤b≤0.2, 0<x≤0.3, 0.5≤y<1, 0<z≤0.3, and x+y+z=1,

M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and

A is F, S, Cl, Br, or a combination thereof,

Formula 7    $Li_aM1_xM2_yPO_{4-b}X_b$,

wherein, in Formula 7, 0.90≤a≤1.1, 0≤x≤0.9, 0≤y≤0.5, 0.9<x+y<1.1, 0≤b≤2,

M1 is chromium (Cr), manganese (Mn), iron (Fe), cobalt (Co), nickel (Ni), copper (Cu), zirconium (Zr), or a combination thereof,

M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof, and

Formula 8    $Li_aM3_zPO_4$,

wherein, in Formula 8, 0.90≤a≤1.1, 0.9≤z≤1.1, and

M3 is chromium (Cr), manganese (Mn), iron (Fe), cobalt (Co), nickel (Ni), copper (Cu), zirconium (Zr), or a combination thereof.

13. A positive electrode comprising the composite positive electrode active material of any one of claims 1 to 12.

14. A lithium battery comprising:

the positive electrode of claim 13;
a negative electrode; and
an electrolyte between the positive electrode and the negative electrode.

15. A method of preparing a composite positive electrode active material, the method comprising:

providing a first lithium transition metal oxide;
providing a second lithium transition metal oxide;
providing a composite;
providing a second carbon-based material;
providing a first core/shell structure obtained by mechanically milling the first lithium transition metal oxide, the composite, and the second carbon-based material;
providing a second core/shell structure obtained by mechanically milling the second lithium transition metal oxide, the composite, and the second carbon-based material; and
mixing the first core/shell structure and the second core/shell structure,
wherein the composite comprises a first metal oxide represented by Formula $M_aO_b$ (0<a≤3, 0<b<4, and b is not an integer if a is 1, 2, or 3) and a first carbon-based material,
the first metal oxide is in a first carbon-based material matrix, M is at least one metal selected from Groups 2 to 13, 15, and 16 of the periodic table of elements,
the second carbon-based material comprises a fibrous carbon-based material having an aspect ratio of 10 or more,
the first lithium transition metal oxide and the second lithium transition metal oxide have different particle diameters from each other, and
the second lithium transition metal oxide comprises a primary particle having a particle diameter of 1 μm or more.

# FIG. 1

## FIG. 2

SDI 5.0kV 8.1mm x20.0k SE(M)　　2.00μm

## FIG. 3

SDI 5.0kV 8.2mm x100k SE(U)　　500nm

# FIG. 4

# FIG. 5

# FIG. 6

# FIG. 7

# FIG. 8

1

4
2
4
3

7

8

5